# EUROPEAN PATENT SPECIFICATION

(11) **EP 3 030 019 B1**
(45) Date of publication and mention of the grant of the patent: **26.12.2018**
(21) Application number: 14839497.6
(22) Date of filing: 22.08.2014
(51) Int. Cl.: H04W 64/00, G01S 19/42, H04W 4/02, H04L 29/08

(54) **IDENTIFICATION METHOD, DEVICE, NETWORK DEVICE AND NETWORK SYSTEM**
IDENTIFIZIERUNGSVERFAHREN, VORRICHTUNG, NETZWERKVORRICHTUNG UND NETZWERKSYSTEM
PROCÉDÉ D'IDENTIFICATION, DISPOSITIF, DISPOSITIF DE RÉSEAU ET SYSTÈME DE RÉSEAU

(30) Priority: 30.08.2013 CN 201310389419
(43) Date of publication of application: 08.06.2016
(73) Proprietor: Huawei Technologies Co., Ltd., Longgang District Shenzhen, Guangdong 518129 (CN)
(72) Inventor: XU, Shenghong, Shenzhen Guangdong 518129 (CN); LI, Xi, Shenzhen Guangdong 518129 (CN)
(74) Representative: Maiwald Patent- und Rechtsanwaltsgesellschaft mbH
(86) International application number: PCT/CN2014/085043
(87) International publication number: WO 2015/027877

(56) References cited:
- WO-A1-2013/001134
- CN-A- 1 113 643
- CN-A- 1 732 708
- CN-A- 1 859 805
- CN-A- 101 291 530
- US-A1- 2011 143 748

## Description

### TECHNICAL FIELD

The present invention relates to the field of communications technologies, and in particular, to an identification method and apparatus and a network system.

### BACKGROUND

With continuous development and evolution of wireless communications technologies, mobile terminal users are also increasing, and are imposing an increasingly high requirement on business service quality of an operator. Relatively common service types include a voice service, a data service, and the like. Because a location of a mobile terminal frequently changes, if an environment type corresponding to the terminal is an indoor environment when a service is being performed, for example, the terminal is located indoors or inside a building when the service is being performed, the service may be referred to as an indoor service. If the environment type corresponding to the terminal is an outdoor environment when the service is being performed, for example, the terminal is located outdoors or outside a building when the service is being performed, the service may be referred to as an outdoor service. A building greatly affects propagation of a communications signal. Therefore, to improve service quality, the operator urgently needs to learn a macro ratio of indoor services to outdoor services, clearly know an indoor coverage blind spot and a changing trend of the indoor services, and the like. The indoor service and the outdoor service may be determined according to the environment type corresponding to the terminal when a service is being performed. Therefore, identification of an environment type corresponding to a terminal when the service in a wireless network is being performed is very important.

In the prior art, an environment type corresponding to a terminal when a service is being performed is mainly identified based on an indoor distributed system. An indoor antenna distributed system is used in the wireless network to evenly distribute signals of a mobile base station to every indoor corner, thereby ensuring that an indoor area has ideal signal coverage. However, this method is limited only to the indoor distributed system; for an indoor service covered by an outdoor macro base station, because the environment type corresponding to the terminal is identified as an outdoor environment type, an indoor service may be finally incorrectly identified as an outdoor service by using this method. In addition, for an entire wireless network, a proportion of services covered by the indoor distributed system is relatively small and even less than 10%. Therefore, identification of services covered by the macro base station, where a proportion of the services is relatively large and even greater than 90%, is a problem that needs to be urgently resolved by the operator.

WO 2013/001134 A1 describes a method comprising receiving identifier data relating to a communication network; examining a set of identifier data to identify number of different identifier data in the set of location data; on the basis of the examining determining a status of an apparatus; and if the examining indicates that the status of the apparatus is a first state, examining context data relating to the first state to determine the current context of the apparatus.

### SUMMARY

A technical problem to be resolved in aspects of the present invention is to provide an identification method and apparatus, a network device, and a network system, which can accurately identify an environment type corresponding to a terminal as defined by the independent claims. In the following description the term "embodiment" is not necessarily to be understood as embodiment of the invention. The embodiments of the invention are solely defined by the appended claims.

A type of an environment in which a terminal is located is determined by using one or more types of information about the terminal, where the terminal and a base station are in a service connection state, so that the environment type corresponding to the terminal can be accurately determined, which helps an operator to learn a macro ratio of indoor services to outdoor services according to the environment type corresponding to the terminal, clearly know an indoor coverage blind spot and a changing trend of the indoor services, and the like, thereby providing a sound basis for the operator to improve business service quality.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a first embodiment of an identification method according to the present invention;
FIG. 2 is a schematic flowchart of a second embodiment of an identification method according to the present invention;
FIG. 3 is a schematic flowchart of a third embodiment of an identification method according to the present invention;
FIG. 4A and FIG. 4B are a schematic flowchart of a fourth embodiment of an identification method according to the present invention;
FIG. 5A and FIG. 5B are a schematic flowchart of a fifth embodiment of an identification method according to the present invention;
FIG. 6A and FIG. 6B are a schematic flowchart of a sixth embodiment of an identification method according to the present invention;
FIG. 7 is a schematic flowchart of a first embodiment of another identification method according to the present invention;
FIG. 8 is a schematic flowchart of a second embodiment of another identification method according to the present invention;
FIG. 9 is a schematic flowchart of a third embodiment of another identification method according to the present invention;
FIG. 10A and FIG. 10B are a schematic flowchart of a fourth embodiment of another identification method according to the present invention;
FIG. 11A and FIG. 11B are a schematic flowchart of a fifth embodiment of another identification method according to the present invention;
FIG. 12A and FIG. 12B are a schematic flowchart of a sixth embodiment of another identification method according to the present invention;
FIG. 13 is a schematic composition diagram of a first embodiment of an identification apparatus according to the present invention;
FIG. 14 is a schematic composition diagram of a second embodiment of an identification apparatus according to the present invention;
FIG. 15 is a schematic composition diagram of a third embodiment of an identification apparatus according to the present invention;
FIG. 16 is a schematic composition diagram of a fourth embodiment of an identification apparatus according to the present invention;
FIG. 17 is a schematic composition diagram of a first embodiment of a terminal according to the present invention;
FIG. 18 is a schematic composition diagram of a second embodiment of a terminal according to the present invention;
FIG. 19 is a schematic composition diagram of a third embodiment of a terminal according to the present invention;
FIG. 20 is a schematic composition diagram of a fourth embodiment of a terminal according to the present invention; and
FIG. 21 is a schematic composition diagram of a network system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

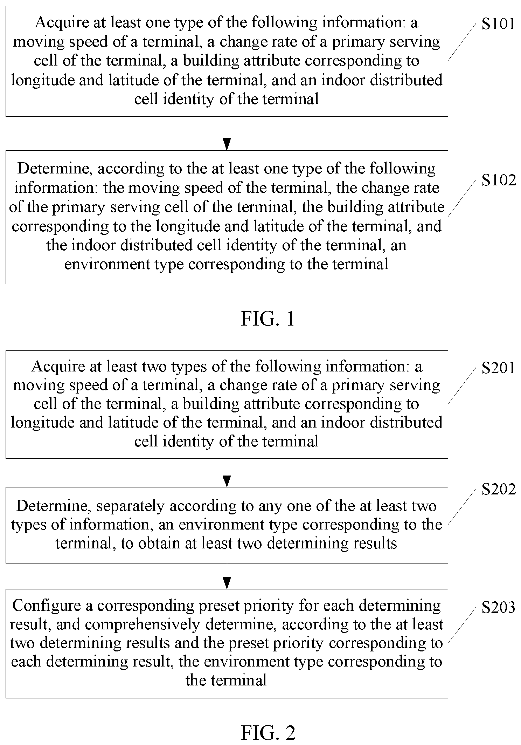

Referring to FIG. 1, FIG. 1 is a schematic flowchart of a first example of an identification method according to the present invention. In this example, the method includes the following steps:
S101. Acquire at least one type of the following information: a moving speed of a terminal, a change rate of a primary serving cell of the terminal, a building attribute corresponding to longitude and latitude of the terminal, and an indoor distributed cell identity of the terminal.

Specifically, when being acquired, the moving speed of the terminal may be acquired by means of calculation according to location information and time information that are of the terminal at at least two time points; the change rate of the primary serving cell of the terminal may be acquired by means of calculation according to a change status of the primary serving cell at at least two time points; for the building attribute corresponding to the longitude and latitude of the terminal, various location technologies may be used to locate the terminal to obtain the longitude and latitude of the terminal, and then the building attribute corresponding to the longitude and latitude is acquired according to a digital map; the indoor distributed cell identity of the terminal may be acquired from information sent by the terminal.

S102. Determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and a base station are in a service connection state, and the environment type includes an outdoor environment and an indoor environment.

For example, when determining is performed according to the moving speed of the terminal, the acquired moving speed of the terminal may be compared with a preset speed threshold; if the moving speed of the terminal reaches the speed threshold, it may be determined that the environment type corresponding to the terminal is an outdoor environment in this case, and otherwise, the environment type corresponding to the terminal is an indoor environment. A manner of performing determining according to the primary serving cell is similar to this. Determining performed according to the building attribute corresponding to the longitude and latitude of the terminal is relatively direct. For example, if a building corresponding to longitude and latitude is an office building, it may be determined that the environment type corresponding to the terminal is an indoor environment in this case; if the corresponding building is a playground, it may be determined that the environment type corresponding to the terminal is an outdoor environment in this case. Determining performed based on the indoor distributed cell identity is relatively simple, and details are not described herein again.

Referring to FIG. 2, FIG. 2 is a schematic flowchart of a second embodiment of an identification method according to the present invention. In this embodiment, the method includes the following steps:
S201. Acquire at least two types of the following information: a moving speed of a terminal, a change rate of a primary serving cell of the terminal, a building attribute corresponding to longitude and latitude of the terminal, and an indoor distributed cell identity of the terminal.
S202. Determine, separately according to each of the at least two types of information, an environment type corresponding to the terminal, to obtain at least two determining results.

The terminal and a base station are in a service connection state, and the environment type includes an outdoor environment and an indoor environment.

S203. Configure a corresponding preset priority for each determining result, and comprehensively determine, according to the at least two determining results and the preset priority corresponding to each determining result, the environment type corresponding to the terminal.

Specifically, when determining is performed in step S203, determining is performed independently according to only one single type of information. For example, when two types of the information, the moving speed and the change rate of the primary serving cell, of the terminal are acquired, determining may be performed independently based on the moving speed to obtain a first determining result, and may be performed based on the change rate of the primary serving cell to obtain a second determining result. When three or four types of the foregoing information are acquired, determining is performed independently based on each type of the information to obtain a first, second and third determining result, or a first, second, third, and fourth determining result.

Because there is an accuracy difference in the determining results that are obtained according to all types of the information, priorities may be configured for the determining results that are obtained according to different information, and then comprehensive determining is performed by combining the different determining results and the preset priorities corresponding to the different determining results, to obtain a more accurate final determining result. Specifically, the environment type corresponding to the terminal may be determined according to a determining result whose preset priority is the highest in the preset priorities that are respectively corresponding to the at least two determining results. For example, the first determining result is obtained by means of determining based on the moving speed and the second determining result is obtained by means of determining based on the change rate of the primary serving cell. Because accuracy of the determining based on the moving speed is higher than accuracy of the determining based on the change rate of the primary serving cell, a higher priority, for example, 6, may be configured for the first determining result, and a lower priority, for example, 4, may be configured for the second determining result. If it is determined, according to the first determining result, that the environment type corresponding to the terminal is an outdoor environment in this case, and it is determined, according to the second determining result, that the environment type corresponding to the terminal is an indoor environment in this case, the environment type corresponding to the terminal may be determined according to the first determining result whose corresponding preset priority is 6, that is, the final determining result is that an environment corresponding to the terminal is an outdoor environment in this case. If there are further a third determining result and a fourth determining result, corresponding priorities may be configured, and determining is performed according to a determining result whose preset priority is the highest in the first to fourth determining results, to obtain the final determining result. Alternatively, the preset priorities corresponding to all determining results of the at least two determining results may be accumulated, and the environment type corresponding to the terminal may be determined according to an accumulated result. For example, if a preset priority corresponding to the first determining result is 7, a preset priority corresponding to the second determining result is 5, a preset priority corresponding to the third determining result is 3, a preset priority corresponding to the fourth determining result is 1, the first determining result and the third determining result are the same, where it is determined that the environment type corresponding to the terminal is an outdoor environment, and the second determining result and the fourth determining result are the same, where it is determined that the environment type corresponding to the terminal is an indoor environment, the preset priorities corresponding to all determining results may be accumulated. Positive and negative values for different determining results may be accumulated, and in this case, the final determining result is determined by 7-5+3-1=4; therefore, the final determining result is that the environment type corresponding to the terminal is an outdoor environment. If an accumulated value is a negative value, the final determining result is that the environment type corresponding to the terminal is an indoor environment. Certainly, if the first determining result and the fourth determining result are the same, and the second determining result and the third determining result are the same, the final determining result is determined by 7-5-3+1=0 in this case, and therefore, the final determining result may be considered as that the environment type corresponding to the terminal is an outdoor environment or an indoor environment.

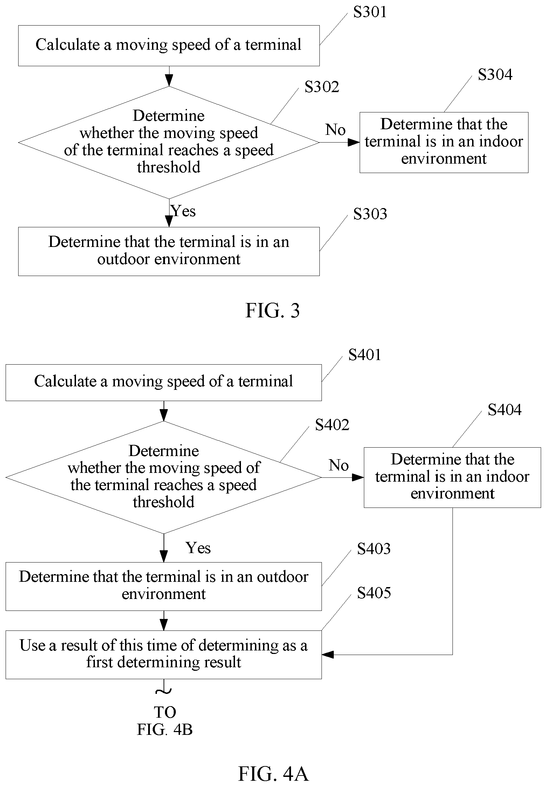

Referring to FIG. 3, FIG. 3 is a schematic flowchart of a third example of an identification method according to the present invention. In this example, the method includes the following steps:
S301. Calculate a moving speed of a terminal.

Specifically, fourth measurement information existing when the terminal and a base station are in a service connection state may be acquired at least twice, where the fourth measurement information includes user identity information of the terminal, time information of the terminal, and location information of the terminal, and the moving speed of the terminal is calculated according to the time information of the terminal and the location information of the terminal; or the moving speed of the terminal is calculated in a Doppler frequency shift manner.

Certainly, in addition to calculating the moving speed of the terminal by means of acquiring the fourth measurement information of the terminal, the moving speed existing when the terminal and the base station are in the service connection state may also be calculated according to time information and location information, where the time information may be learned by using general information exchanged between the base station and the terminal, for example, when a voice service is being performed, both an access time of the terminal and a release time of the terminal are carried in the exchanged general information, and the location information of the terminal at the access time and the release time is acquired with reference to an existing location technology.

The user identity information may be an international mobile subscriber identity (International Mobile Subscriber Identification Number, IMSI for short), a temporary mobile subscriber identity (Temporary Mobile Subscriber Identity, TMSI for short), a packet temporary mobile subscriber identity (Packet Temperate Mobile Subs cription Identity, P-TMSI for short), or the like, and is used to identify the service. Preferably, the fourth measurement information may be acquired periodically, which helps to collect statistics on a time and also helps to calculate an average moving speed or an instantaneous moving speed within a consecutive period of time. A period for acquiring the fourth measurement information may be set to be relatively short, for example, 2 pieces/second. In this way, a problem that round-trip movement, between two points, of the terminal causes inaccurate distance data obtained according to the location information may be avoided to some degree. The location information of the terminal may be determined and reported by using the Global Positioning System (Global Positioning System, GPS for short) on the terminal, or the location information of the terminal may be determined by using another location technology, such as a location technology based on a round-trip delay and a cell index that are of information exchange between the terminal and the base station, or a location technology based on signal feature matching of the terminal. A principle of the location technology based on signal feature matching of the terminal is to create a signal feature database of the terminal at different spatial locations. When a terminal is being located, information, such as level information and signal quality information, reported by the terminal at a longitude and latitude location may be analyzed, and the information is compared with the created signal feature database to find a location that matches a signal feature; in this case, a location of the terminal can be determined, so as to obtain longitude and latitude of the terminal when the terminal is in a call. The time information may be information about an absolute time that is the same as a regular time; or a time point for receiving the fourth measurement information for the first time may be used as a reference, and information about a relative time may be acquired from subsequent fourth measurement information. Then the moving speed of the terminal is calculated according to the location information and the time information in the acquired fourth measurement information. For example, if a user is at a location a at a moment A and arrives at a location b at a moment B, a moving speed of a terminal within a time period between A and B is (b-a)/(B-A). Certainly, the moving speed of the terminal may also be directly calculated on a base station side in a Doppler frequency shift manner.

S302. Determine whether the moving speed of the terminal reaches a speed threshold; if yes, execute step S303, and otherwise, execute step S304.

Specifically, during the determining, it may be determined whether an average moving speed of the terminal within entire time or a preset time reaches the preset speed threshold, where the terminal and the base station are in the service connection state within the entire time or the preset time; or
it may be determined whether a quantity of times that an instantaneous moving speed of the terminal reaches the speed threshold within entire time or a preset time reaches a preset quantity, where the terminal and the base station are in the service connection state within the entire time or the preset time.

For the average moving speed, any two moments and location information corresponding to the any two moments may be selected for calculation. For the instantaneous moving speed, the instantaneous moving speed refers to a moving speed at a moment, and a timescale may be determined as a benchmark for calculation. For example, Is is determined as a benchmark for calculating the instantaneous moving speed, and a time period during which a user and the base station are in a service connection state is N seconds. If within the N seconds, an instantaneous moving speed of the user reaches a speed threshold, for example, 10 km/s for L seconds, that is, the moving speed of the user reaches the speed threshold ten times within the N seconds, it may be determined that the terminal is moving quickly, an environment corresponding to the terminal is an outdoor environment, and a service performed by the terminal is an outdoor service; otherwise, the service performed by the terminal is an indoor service. When the service is being performed, if the terminal is located indoors or inside a building, the service may be referred to as an indoor service; when the service is being performed, the terminal is located outdoors or outside a building, the service may be referred to as an outdoor service. Certainly, one speed threshold may be set herein, or two speed thresholds may be set specific for an upper limit and a lower limit of the moving speed of the terminal. For example, if the upper limit is set to 10 km/h, and the average moving speed reaches 10 km/h or the instantaneous moving speed reaches 10 km/h for ten or more times, it is determined that the terminal is in an outdoor environment and the service is an outdoor service; if the lower limit is set to 0.5 km/h, and the average moving speed is lower than 0.5 km/h or the instantaneous moving speed is lower than 0.5 km/h for ten or more times, it is determined that the terminal is in an indoor environment and the service is an indoor service. For a speed interval between 0.5 km/h and 10 km/h, identification may be performed in another identification manner, for example, an identification manner based on an indoor distributed system.

S303. Determine that the terminal is in an outdoor environment.

S304. Determine that the terminal is in an indoor environment.

In this example, a method for identifying a service type of a terminal based on a moving speed of the terminal is provided, where identification accuracy in the method is relatively high, and in particular, identification accuracy of an outdoor service of a user moving at a relatively high speed, such as taking a ride, running, or long-distance walking, is very high, and identification accuracy of an indoor still service inside an office building, a residence, or the like, is very high. When these services are performed, an environment type corresponding to the terminal accounts for a very large proportion of total services. Whether the terminal is quick moving or tends to be still is learned based on the moving speed, so as to determine an environment type corresponding to the terminal and further obtain a service type, which may more accurately identify the environment type corresponding to the terminal when a service is being performed, and may more accurately determine a service covered by an indoor distributed system or a macro base station, thereby providing a sound basis for an operator to improve business service quality.

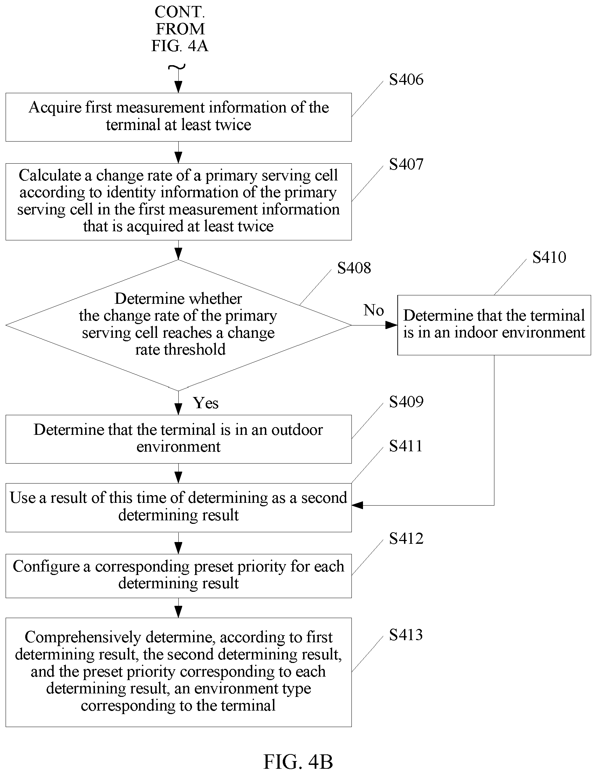

Referring to FIG. 4A and FIG. 4B, FIG. 4A and FIG. 4B are a schematic flowchart of a fourth example of an identification method according to the present invention. In this example, the method includes the following steps:
S401. Calculate a moving speed of a terminal.
S402. Determine whether the moving speed of the terminal reaches a speed threshold; if yes, execute step S403, and otherwise, execute step S404.
S403. Determine that the terminal is in an outdoor environment.
S404. Determine that the terminal is in an indoor environment.
S405. With reference to steps S403 and S404, use a result of this time of determining as a first determining result.
S406. Acquire first measurement information of the terminal at least twice.

The first measurement information includes user identity information and identity information of a primary serving cell.

S407. Calculate a change rate of a primary serving cell according to identity information of the primary serving cell in the first measurement information that is acquired at least twice.

Generally, when the terminal and a base station are in a service connection state, the primary serving cell of the terminal generally keeps unchanged, but if the terminal is in an outdoor moving state, the primary serving cell of the terminal changes with a location of the terminal; therefore, the change rate of the primary serving cell may be used to determine an environment type corresponding to the terminal. During specific calculation, when the first measurement information is acquired ten times, if the first measurement information changes once, the change rate of the primary serving cell is 10%, and if the first measurement information changes twice, the change rate of the primary serving cell is 20%. Preferably, pieces of first measurement information used for calculation may be consecutive, and during calculation of the change rate, a change rate of the primary serving cell in a current piece of first measurement information may be calculated based on a previous piece of first measurement information. For example, if there are three pieces of first measurement information D, E, and F, a primary serving cell of D is d, a primary serving cell of E is e, and a primary serving cell of F is f, it is considered that the change rate of the primary serving cell is 66.7%.

Certainly, non-consecutive pieces of first measurement information may also be used as a calculation basis; in addition to calculating the change rate of the primary serving cell based on a previous piece of first measurement information, the calculation may also be performed based on the first piece of first measurement information.

S408. Determine whether the change rate of the primary serving cell reaches a change rate threshold.

Specifically, a single change rate threshold, for example, 10% may be set herein. If the first measurement information is received ten times, when the primary serving cell changes once or more, it is considered that the change rate of the primary serving cell reaches the change rate threshold. In this case, it indicates a cross-cell moving case of the terminal, and it may be determined that an environment type corresponding to the terminal is an outdoor environment, and certainly, a service is an outdoor service; otherwise, an environment type corresponding to the terminal is an indoor environment, and a corresponding service is an indoor service. Certainly, two separate change rate thresholds may also be set, for example, an upper limit is 10%, and a lower limit is 0. That is, when the change rate is greater than 10%, it is determined that the environment type corresponding to the terminal is an outdoor environment, and when the change rate is 0, it is determined that the environment type corresponding to the terminal is an indoor environment. For an interval between 0 and 10%, identification is performed in another identification manner, performed based on an indoor distributed system or based on the moving speed of the terminal.

S409. Determine that the terminal is in an outdoor environment.

S410. Determine that the terminal is in an indoor environment.

S411. With reference to steps S409 and S410, use a result of this time of determining as a second determining result.

S412. Configure a corresponding preset priority for each of the first determining result and the second determining result.

S413. Comprehensively determine, according to the first determining result, the second determining result, and the preset priority corresponding to each determining result, an environment type corresponding to the terminal.

For example, a moving speed of the terminal is very high within a relatively long period of time, and it is determined, based on the moving speed, that a service type is an outdoor service, but because the change rate of the primary serving cell of the terminal is 0, it is determined, based on the change rate of the primary serving cell, that the service type is an indoor service. In this case, a priority 7 may be configured for the first determining result, a priority 3 may be configured for the second determining result, and finally, it is comprehensively determined that an environment corresponding to the terminal is an outdoor environment, and a type of a service initiated by the terminal this time is an outdoor service. When comprehensive determining is performed, a determining result with a higher priority may be selected to perform final determining, or the preset priorities corresponding to the determining results may be accumulated to perform final determining.

A manner of determining, based on the change rate of the primary serving cell, the environment type corresponding to the terminal may be combined with another identification manner for comprehensive use, or may be independently used. In addition to calculation of the change rate of the primary serving cell, change information of another cell, such as a change rate of an active set cell or a change rate of a neighbor cell, may also be used as a basis of determination. Because there is generally more than one active set cell or neighbor cell, a calculation amount thereof is huge. For example, for the active set cell, a change rate in a single measurement message may be calculated according to a ratio of a quantity of changed active set cells to a total quantity of active set cells, and a total change rate is calculated with reference to multiple measurement messages. When the total change rate is greater than a preset threshold, it may be determined that the terminal is in an outdoor environment, and a current service is an outdoor service. A calculation manner of the change rate of the neighbor cell is generally similar to a calculation manner of the change rate of the active set cell, and details are not described again. Certainly, two or more change rates may also be used to perform comprehensive determining, for example, the change rate of the primary serving cell and the change rate of the active set cell may be combined to perform comprehensive determining.

In this example, comprehensive determining is performed with reference to a manner based on a moving speed and a manner based on a change rate of a primary serving cell, which may combine advantages of the two manners to some degree, and avoid disadvantages of the two manners, so as to improve accuracy of a determining result.

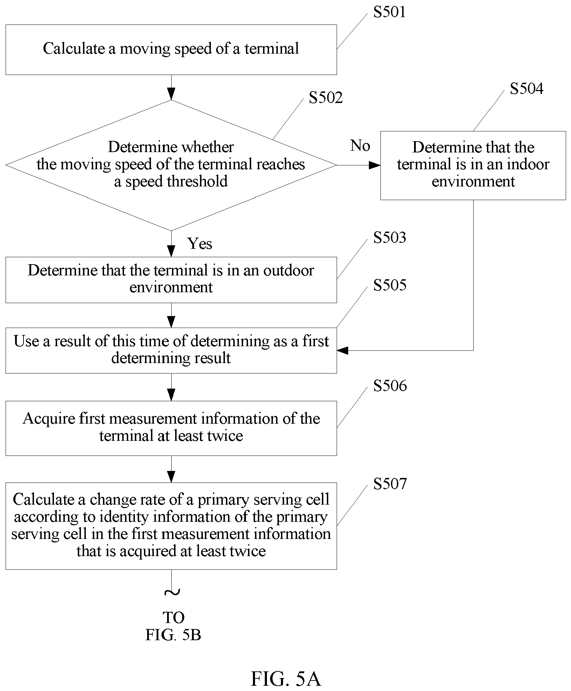

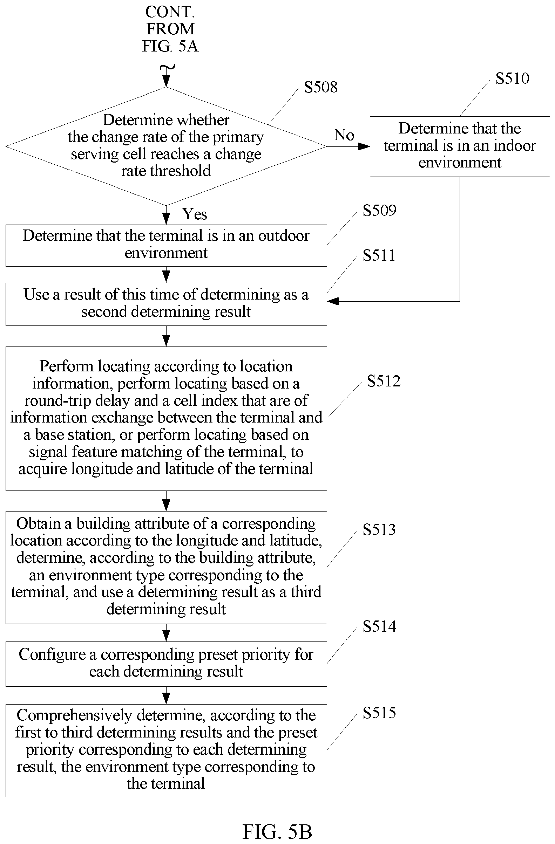

Referring to FIG. 5A and FIG. 5B, FIG. 5A and FIG. 5B are a schematic flowchart of a fifth example of an identification method according to the present invention. In this example, the method includes the following steps:
S501. Calculate a moving speed of a terminal.
S502. Determine whether the moving speed of the terminal reaches a speed threshold; if yes, execute step S503, and otherwise, execute step S504.
S503. Determine that the terminal is in an outdoor environment.
S504. Determine that the terminal is in an indoor environment.
S505. With reference to steps S503 and S504, use a result of this time of determining as a first determining result.
S506. Acquire first measurement information of the terminal at least twice.
S507. Calculate a change rate of a primary serving cell according to identity information of the primary serving cell in the first measurement information that is acquired at least twice.
S508. Determine whether the change rate of the primary serving cell reaches a change rate threshold.
S509. Determine that the terminal is in an outdoor environment.
S510. Determine that the terminal is in an indoor environment.
S511. With reference to steps S509 and S510, use a result of this time of determining as a second determining result.
S512. Perform locating according to location information, perform locating based on a round-trip delay and a cell index (RTT-CELLID) that are of information exchange between the terminal and a base station, or perform locating based on signal feature matching of the terminal, to acquire longitude and latitude of the terminal.

The location information may be determined and reported by using the GPS on the terminal or by using another location technology, such as a location technology based on a round-trip delay and a cell index (RTT-CELLID), or a location technology based on signal feature matching. A principle of the location technology based on signal feature matching is to create a signal feature database of the terminal at different spatial locations. When a terminal is being located, information, such as level information and signal quality information, reported by the terminal at a longitude and latitude location may be analyzed, and the information is compared with the created signal feature database to find a location that matches a signal feature; in this case, a location of the terminal can be determined, so as to obtain corresponding longitude and latitude of the terminal when the terminal and the base station are in a service connection state.

S513. Obtain a building attribute of a corresponding location according to the longitude and latitude, determine, according to the building attribute, an environment type corresponding to the terminal, and use a result of this time of determining as a third determining result.

Specifically, data on building attributes of all longitude and latitude locations may be acquired by using a geographic information system (Geographic Information System, GIS for short), and these data are used to create a database in which the longitude and latitude are corresponding to the building attribute. When the longitude and latitude existing when the terminal and the base station are in the service connection state are obtained, the building attribute of the corresponding location may be obtained by means of database querying. For example, if a building attribute of a location corresponding to longitude 121.3549 and latitude 31.19152 is an urban open area, the environment type corresponding to the terminal is an outdoor environment, and a current service is an outdoor service; if the building attribute corresponding to the longitude and the latitude is a building, the environment type corresponding to the terminal is an indoor environment, and the current service is an indoor service. This identification manner has higher accuracy for identifying a service performed in a medium or large building or an outdoor open area.

S514. Configure a corresponding preset priority for each determining result.

S515. Comprehensively determine, according to the first to third determining results and the preset priority corresponding to each determining result, the environment type corresponding to the terminal.

In this example, three manners of identifying an environment type corresponding to a terminal are provided, which are respectively based on a moving speed, a change rate of a primary serving cell, and a geographic location. Different determining results may exist according to different identification manners. In this case, comprehensive determining may be performed by configuring preset priorities for results obtained in different manners, to improve accuracy of final determining. Certainly, the three identification manners may be combined for comprehensive use, or may be independently used.

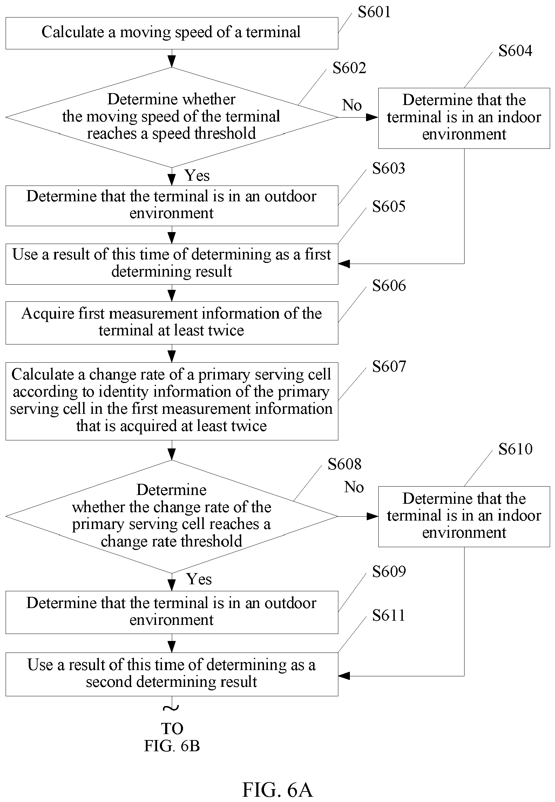

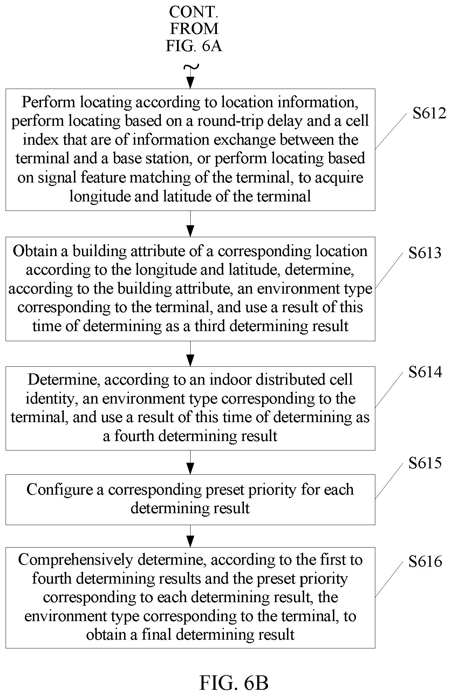

Referring to FIG. 6A and FIG. 6B, FIG. 6A and FIG. 6B are a schematic flowchart of a sixth embodiment of an identification method according to the present invention. In this embodiment, the method includes the following steps:
S601. Calculate a moving speed of a terminal.
S602. Determine whether the moving speed of the terminal reaches a speed threshold; if yes, execute step S603, and otherwise, execute step S604.
S603. Determine that the terminal is in an outdoor environment.
S604. Determine that the terminal is in an indoor environment.
S605. With reference to steps S603 and S604, use a result of this time of determining as a first determining result.
S606. Acquire first measurement information of the terminal at least twice.
S607. Calculate a change rate of a primary serving cell according to identity information of the primary serving cell in the first measurement information that is acquired at least twice.
S608. Determine whether the change rate of the primary serving cell reaches a change rate threshold.
S609. Determine that the terminal is in an outdoor environment.
S610. Determine that the terminal is in an indoor environment.
S611. With reference to steps S609 and S610, use a result of this time of determining as a second determining result.
S612. Perform locating according to location information, perform locating based on a round-trip delay and a cell index (RTT-CELLID) that are of information exchange between the terminal and a base station, or perform locating based on signal feature matching of the terminal, to acquire longitude and latitude of the terminal.
S613. Obtain a building attribute of a corresponding location according to the longitude and latitude, determine, according to the building attribute, an environment type corresponding to the terminal, and use a result of this time of determining as a third determining result.
S614. Determine, according to an indoor distributed cell identity, an environment type corresponding to the terminal, and use a result of this time of determining as a fourth determining result.
Specifically, third measurement information may be acquired, where the third measurement information may include the indoor distributed cell identity, and the indoor distributed cell identity is used to distinguish whether a cell in which the terminal is located is an indoor distributed cell or an outdoor distributed cell. The environment type corresponding to the terminal may be determined by using the indoor distributed cell identity.
S615. Configure a corresponding preset priority for each determining result.
S616. Comprehensively determine, according to the first to fourth determining results and the preset priority corresponding to each determining result, the environment type corresponding to the terminal, to obtain a final determining result.

In this example, four identification manners are combined in total, and comprehensive determining is performed by using the four manners, which may greatly improve accuracy of determining, provide accurate data for an operator, facilitate subsequent network building, and improve business service quality. Certainly, the four identification manners may be freely combined for comprehensive use, or may be independently used. In addition to the four identification manners described in this embodiment, another identification manner may further be combined, and a proper priority may be configured for the another identification manner to perform determining, for example, based on a level change of a cell.

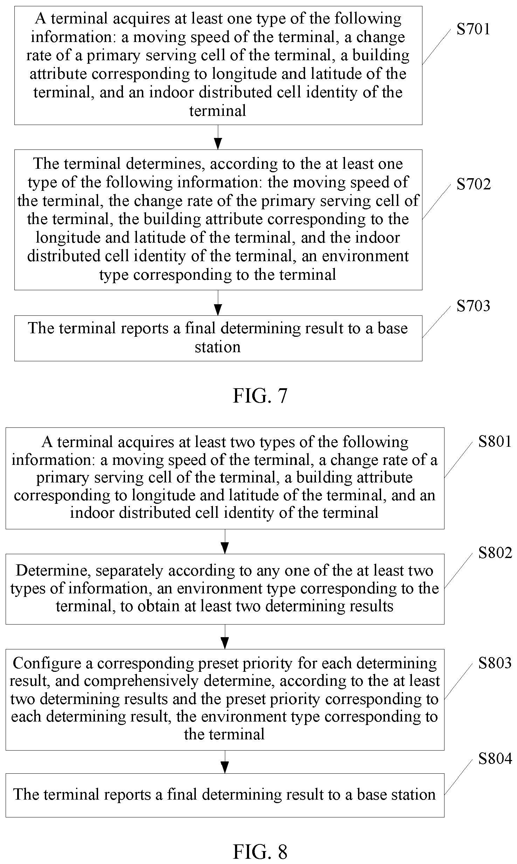

Referring to FIG. 7, FIG. 7 is a schematic flowchart of a first example of another identification method according to the present invention. In this example, the method includes the following steps:
S701. A terminal acquires at least one type of the following information: a moving speed of the terminal, a change rate of a primary serving cell of the terminal, a building attribute corresponding to longitude and latitude of the terminal, and an indoor distributed cell identity of the terminal.

Specifically, when acquiring the moving speed of the terminal, the terminal may acquire the moving speed of the terminal by means of calculation according to location information and time information that are of the terminal at at least two time points; the change rate of the primary serving cell of the terminal may be acquired by means of calculation according to a change status of the primary serving cell at at least two time points; for the building attribute corresponding to the longitude and latitude of the terminal, various location technologies may be used to locate the terminal to obtain the longitude and latitude of the terminal, and then the building attribute corresponding to the longitude and latitude is acquired according to a digital map; the indoor distributed cell identity of the terminal may be acquired from information sent by the terminal to a base station.

S702. The terminal determines, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and the base station are in a service connection state, and the environment type includes an outdoor environment and an indoor environment.

For example, when determining is performed according to the moving speed of the terminal, the acquired moving speed of the terminal may be compared with a preset speed threshold; if the moving speed of the terminal reaches the speed threshold, it may be determined that the environment type corresponding to the terminal is an outdoor environment in this case, and otherwise, the environment type corresponding to the terminal is an indoor environment. A manner of performing determining according to the primary serving cell is similar to this. Determining performed according to the building attribute corresponding to the longitude and latitude of the terminal is relatively direct. For example, if a building corresponding to longitude and latitude is an office building, it may be determined that the environment type corresponding to the terminal is an indoor environment in this case; if the corresponding building is a playground, it may be determined that the environment type corresponding to the terminal is an outdoor environment in this case. Determining performed based on the indoor distributed cell identity is relatively simple, and details are not described herein again.

S703. The terminal reports a final determining result to a base station.

Specifically, an objective of identifying the environment type corresponding to the terminal is to make it convenient for an operator to learn a macro ratio of indoor services to outdoor services according to the environment type corresponding to the terminal, clearly know an indoor coverage blind spot and a changing trend of the indoor services, and the like, so as to provide a sound basis for the operator to improve business service quality. Therefore, after acquiring various types of information to obtain the final determining result, the terminal needs to report the final determining result to the base station, so that the operator collects statistics on a proportion of services and properly deploys a communications network.

Referring to FIG. 8, FIG. 8 is a schematic flowchart of a second example of another identification method according to the present invention. In this example, the method includes the following steps:
S801. A terminal acquires at least two types of the following information: a moving speed of the terminal, a change rate of a primary serving cell of the terminal, a building attribute corresponding to longitude and latitude of the terminal, and an indoor distributed cell identity of the terminal.
S802. Determine, separately according to each of the at least two types of information, an environment type corresponding to the terminal, to obtain at least two determining results.

The terminal and a base station are in a service connection state, and the environment type includes an outdoor environment and an indoor environment.

S803. Configure a corresponding preset priority for each determining result, and comprehensively determine, according to the at least two determining results and the preset priority corresponding to each determining result, the environment type corresponding to the terminal.

Specifically, when determining is performed in step S803, determining is performed independently according to only one single type of information. For example, when two types of the information, the moving speed and the change rate of the primary serving cell, of the terminal are acquired, determining may be performed independently based on the moving speed to obtain a first determining result, and a second determining result is obtained based on the change rate of the primary serving cell. When three or four types of the foregoing information are acquired, determining is performed independently based on each type of the information to obtain a first, second and third determining result, or a first, second, third, and fourth determining result.

Because there is an accuracy difference in the determining results that are obtained according to all types of the information, priorities may be configured for the determining results that are obtained according to different information, and then comprehensive determining is performed by combining the different determining results and the preset priorities corresponding to the different determining results, to obtain a more accurate final determining result. Specifically, the environment type corresponding to the terminal may be determined according to a determining result whose preset priority is the highest in the preset priorities that are respectively corresponding to the at least two determining results. For example, the first determining result is obtained by means of determining based on the moving speed and the second determining result is obtained by means of determining based on the change rate of the primary serving cell. Because accuracy of the determining based on the moving speed is higher than accuracy of the determining based on the change rate of the primary serving cell, a higher priority, for example, 6, may be configured for the first determining result, and a lower priority, for example, 4, may be configured for the second determining result. If it is determined, according to the first determining result, that the environment type corresponding to the terminal is an outdoor environment in this case, and it is determined, according to the second determining result, that the environment type corresponding to the terminal is an indoor environment in this case, the environment type corresponding to the terminal may be determined according to the first determining result whose corresponding preset priority is 6, that is, the final determining result is that an environment corresponding to the terminal is an outdoor environment in this case. If there are further a third determining result and a fourth determining result, corresponding priorities may be configured, and determining is performed according to a determining result whose preset priority is the highest in the first to fourth determining results, to obtain the final determining result. Alternatively, the preset priorities corresponding to all determining results of the at least two determining results may be accumulated, and the environment type corresponding to the terminal may be determined according to an accumulated result. For example, if a preset priority corresponding to the first determining result is 7, a preset priority corresponding to the second determining result is 5, a preset priority corresponding to the third determining result is 3, a preset priority corresponding to the fourth determining result is 1, the first determining result and the third determining result are the same, where it is determined that the environment type corresponding to the terminal is an outdoor environment, and the second determining result and the fourth determining result are the same, where it is determined that the environment type corresponding to the terminal is an indoor environment, the preset priorities corresponding to all determining results may be accumulated. Positive and negative values for different determining results may be accumulated, and in this case, the final determining result is determined by 7-5+3-1=4; therefore, the final determining result is that the environment type corresponding to the terminal is an outdoor environment. If an accumulated value is a negative value, the final determining result is that the environment type corresponding to the terminal is an indoor environment. Certainly, if the first determining result and the fourth determining result are the same, and the second determining result and the third determining result are the same, the final determining result is determined by 7-5-3+1=0 in this case, and therefore, the final determining result may be considered as that the environment type corresponding to the terminal is an outdoor environment or an indoor environment.

S804. The terminal reports a final determining result to a base station.

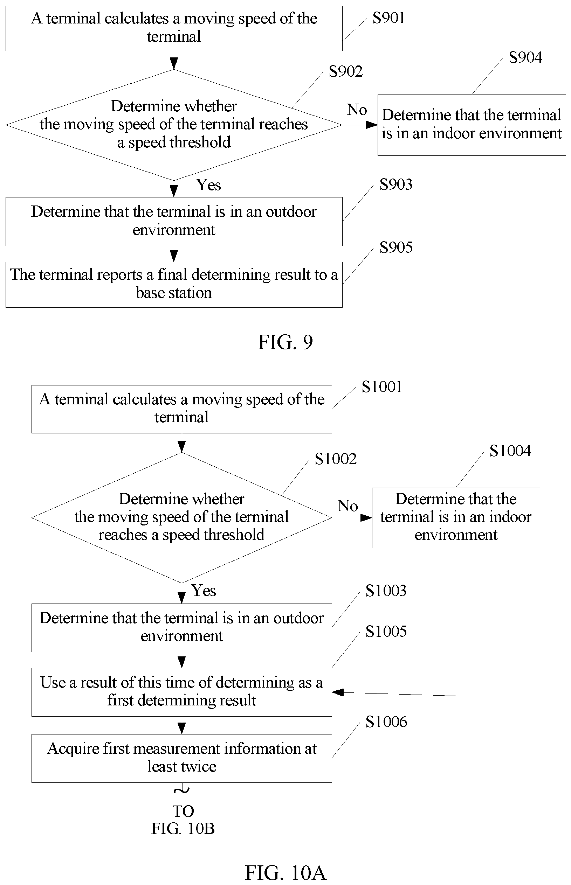

Referring to FIG. 9, FIG. 9 is a schematic flowchart of a third example of another identification method according to the present invention. In this example, the method includes the following steps:
S901. A terminal calculates a moving speed of the terminal.

Specifically, fourth measurement information may be acquired at least twice, where the fourth measurement information includes user identity information of the terminal, time information of the terminal, and location information of the terminal, and the moving speed of the terminal is calculated according to the time information of the terminal and the location information of the terminal; or
the moving speed of the terminal is calculated in a Doppler frequency shift manner.

Certainly, in addition to calculating the moving speed of the terminal by means of acquiring the fourth measurement information, the moving speed existing when the terminal and a base station are in a service connection state may also be calculated according to time information and location information, where the time information may be learned by using regular service information of the terminal, for example, when the terminal performs a voice service, both an access time of the terminal and a release time of the terminal are carried in the regular service information, and the location information of the terminal at the access time and the release time is then acquired with reference to an existing location technology.

The user identity information may be an international mobile subscriber identity (International Mobile Subscriber Identification Number, IMSI for short), a temporary mobile subscriber identity (Temporary Mobile Subscriber Identity, TMSI for short), a packet temporary mobile subscriber identity (Packet Temperate Mobile Subs cription Identity, P-TMSI for short), or the like, and is used to identify the service. Preferably, the fourth measurement information may be acquired periodically, which helps to collect statistics on a time and also helps to calculate an average moving speed or an instantaneous moving speed within a consecutive period of time. A period for acquiring the fourth measurement information may be set to be relatively short, for example, 2 pieces/second. In this way, a problem that round-trip movement, between two points, of the terminal causes inaccurate distance data obtained according to the location information may be avoided to some degree. The location information of the terminal may be determined by using the Global Positioning System (Global Positioning System, GPS for short) on the terminal, or the location information of the terminal may be determined by using another location technology, such as a location technology based on a round-trip delay and a cell index that are of information exchange between the terminal and the base station, or a location technology based on signal feature matching of the terminal. A principle of the location technology based on signal feature matching of the terminal is to create a signal feature database of the terminal at different spatial locations. When a terminal is being located, information about the terminal at a longitude and latitude location, such as level information and signal quality information, may be analyzed, and the information is compared with the created signal feature database to find a location that matches a signal feature; in this case, a location of the terminal can be determined, so as to obtain longitude and latitude of the terminal when the terminal is in a call. The time information may be information about an absolute time that is the same as a regular time; or a time point for acquiring the fourth measurement information for the first time may be used as a reference, and information about a relative time may be carried in subsequent fourth measurement information. Then the moving speed of the terminal is calculated according to the location information and the time information in the acquired fourth measurement information. For example, if a user is at a location a at a moment A and arrives at a location b at a moment B, a moving speed of a terminal within a time period between A and B is (b-a)/(B-A). Certainly, the moving speed of the terminal may also be directly calculated on a base station side in a Doppler frequency shift manner.

S902. Determine whether the moving speed of the terminal reaches a speed threshold; if yes, execute step S903, and otherwise, execute step S904.

Specifically, during the determining, it may be determined whether an average moving speed of the terminal within entire time or a preset time reaches the preset speed threshold, where the terminal and the base station are in the service connection state within the entire time or the preset time; or
it may be determined whether a quantity of times that an instantaneous moving speed of the terminal reaches the speed threshold within entire time or a preset time reaches a preset quantity, where the terminal and the base station are in the service connection state within the entire time or the preset time.

For the average moving speed, any two moments and location information corresponding to the any two moments may be selected for calculation. For the instantaneous moving speed, the instantaneous moving speed refers to a moving speed at a moment, and a timescale may be determined as a benchmark for calculation. For example, Is is determined as a benchmark for calculating the instantaneous moving speed, and a time period during which a user and the base station are in a service connection state is N seconds. If within the N seconds, an instantaneous moving speed of the user reaches a speed threshold, for example, 10 km/s for L seconds, that is, the moving speed of the user reaches the speed threshold ten times within the N seconds, it may be determined that the terminal is moving quickly, an environment corresponding to the terminal is an outdoor environment, and a service performed by the terminal is an outdoor service; otherwise, the service performed by the terminal is an indoor service. When the service is being performed, if the terminal is located indoors or inside a building, the service may be referred to as an indoor service; when the service is being performed, the terminal is located outdoors or outside a building, the service may be referred to as an outdoor service. Certainly, one speed threshold may be set herein, or two speed thresholds may be set specific for an upper limit and a lower limit of the moving speed of the terminal. For example, if the upper limit is set to 10 km/h, and the average moving speed reaches 10 km/h or the instantaneous moving speed reaches 10 km/h for ten or more times, it is determined that the terminal is in an outdoor environment and the service is an outdoor service; if the lower limit is set to 0.5 km/h, and the average moving speed is lower than 0.5 km/h or the instantaneous moving speed is lower than 0.5 km/h for ten or more times, it is determined that the terminal is in an indoor environment and the service is an indoor service. For a speed interval between 0.5 km/h and 10 km/h, identification may be performed in another identification manner, for example, an identification manner based on an indoor distributed system.

S903. Determine that the terminal is in an outdoor environment.

S904. Determine that the terminal is in an indoor environment.

In this example, a method for identifying a service type of a terminal based on a moving speed of the terminal is provided, where identification accuracy in the method is relatively high, and in particular, identification accuracy of an outdoor service of a user moving at a relatively high speed, such as taking a ride, running, or long-distance walking, is very high, and identification accuracy of an indoor still service inside an office building, a residence, or the like, is very high. When these services are performed, an environment type corresponding to the terminal accounts for a very large proportion of total services. Whether a moving state of the terminal is quick moving or tends to be still is learned based on the moving speed, so as to determine an environment type corresponding to the terminal and further obtain a service type, which may more accurately identify the environment type corresponding to the terminal when a service is being performed, and may more accurately determine a service covered by an indoor distributed system or a macro base station, thereby providing a sound basis for an operator to improve business service quality.

S905. The terminal reports a final determining result to a base station.

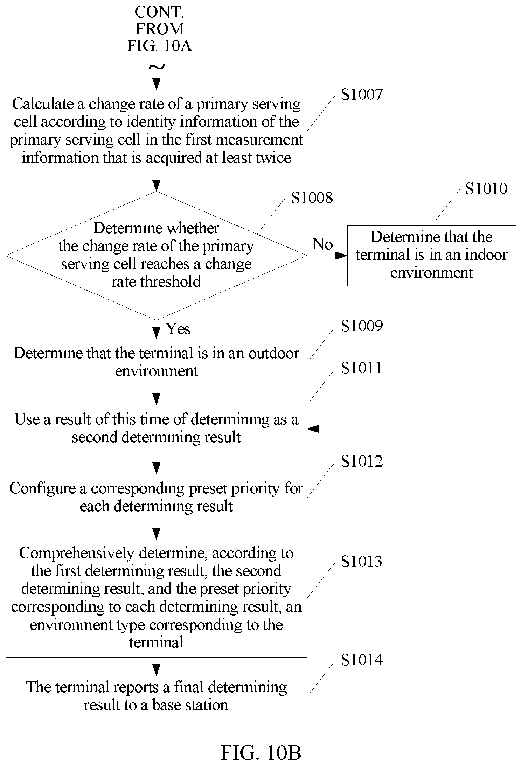

Referring to FIG. 10A and FIG. 10B, FIG. 10A and FIG. 10B are a schematic flowchart of a fourth example of another identification method according to the present invention. In this example, the method includes the following steps:
S1001. A terminal calculates a moving speed of the terminal.
S1002. Determine whether the moving speed of the terminal reaches a speed threshold; if yes, execute step S1003, and otherwise, execute step S1004.
S1003. Determine that the terminal is in an outdoor environment.
S1004. Determine that the terminal is in an indoor environment.
S1005. With reference to steps S1003 and S1004, use a result of this time of determining as a first determining result.
S1006. Acquire first measurement information at least twice.

The first measurement information includes user identity information and identity information of a primary serving cell.

S1007. Calculate a change rate of a primary serving cell according to identity information of the primary serving cell in the first measurement information that is acquired at least twice.

Generally, when the terminal and a base station are in a service connection state, the primary serving cell of the terminal generally keeps unchanged, but if the terminal is in an outdoor moving state, the primary serving cell of the terminal changes with a location of the terminal; therefore, the change rate of the primary serving cell may be used to determine an environment type corresponding to the terminal. During specific calculation, when the first measurement information is acquired ten times, if the first measurement information changes once, the change rate of the primary serving cell is 10%, and if the first measurement information changes twice, the change rate of the primary serving cell is 20%. Preferably, pieces of first measurement information used for calculation may be consecutive, and during calculation of the change rate, a change rate of the primary serving cell in a current piece of first measurement information may be calculated based on a previous piece of first measurement information. For example, if there are three pieces of first measurement information D, E, and F, a primary serving cell of D is d, a primary serving cell of E is e, and a primary serving cell of F is f, it is considered that the change rate of the primary serving cell is 66.7%.

Certainly, non-consecutive pieces of first measurement information may also be used as a calculation basis; in addition to calculating the change rate of the primary serving cell based on a previous piece of first measurement information, the calculation may also be performed based on the first piece of first measurement information.

S1008. Determine whether the change rate of the primary serving cell reaches a change rate threshold.

Specifically, a single change rate threshold, for example, 10% may be set herein. If the first measurement information is received ten times, when the primary serving cell changes once or more, it is considered that the change rate of the primary serving cell reaches the change rate threshold. In this case, it indicates a cross-cell moving case of the terminal, and it may be determined that an environment type corresponding to the terminal is an outdoor environment, and certainly, a service is an outdoor service; otherwise, an environment type corresponding to the terminal is an indoor environment, and a corresponding service is an indoor service. Certainly, two separate change rate thresholds may also be set, for example, an upper limit is 10%, and a lower limit is 0. That is, when the change rate is greater than 10%, it is determined that the environment type corresponding to the terminal is an outdoor environment, and when the change rate is 0, it is determined that the environment type corresponding to the terminal is an indoor environment. For an interval between 0 and 10%, identification is performed in another identification manner, performed based on an indoor distributed system or based on the moving speed of the terminal.

S1009. Determine that the terminal is in an outdoor environment.

S1010. Determine that the terminal is in an indoor environment.

S1011. With reference to steps S1009 and S1010, use a result of this time of determining as a second determining result.

S1012. Configure a corresponding preset priority for each determining result.

S1013. Comprehensively determine, according to the first determining result, the second determining result, and the preset priority corresponding to each determining result, an environment type corresponding to the terminal.

For example, a moving speed of the terminal is very high within a relatively long period of time, and it is determined, based on the moving speed, that a service type is an outdoor service, but because the change rate of the primary serving cell of the terminal is 0, it is determined, based on the change rate of the primary serving cell, that the service type is an indoor service. In this case, a priority 7 may be configured for the first determining result, a priority 3 may be configured for the second determining result, and finally, it is comprehensively determined that an environment corresponding to the terminal is an outdoor environment, and a type of a service initiated by the terminal this time is an outdoor service. When comprehensive determining is performed, a determining result with a higher priority may be selected to perform final determining, or the preset priorities corresponding to the determining results may be accumulated to perform final determining.

A manner of determining, based on the change rate of the primary serving cell, the environment type corresponding to the terminal may be combined with another identification manner for comprehensive use, or may be independently used. In addition to calculation of the change rate of the primary serving cell, change information of another cell, such as a change rate of an active set cell or a change rate of a neighbor cell, may also be used as a basis of determination. Because there is generally more than one active set cell or neighbor cell, a calculation amount thereof is huge. For example, for the active set cell, a change rate in a single measurement message may be calculated according to a ratio of a quantity of changed active set cells to a total quantity of active set cells, and a total change rate is calculated with reference to multiple measurement messages. When the total change rate is greater than a preset threshold, it may be determined that the terminal is in an outdoor environment, and a current service is an outdoor service. A calculation manner of the change rate of the neighbor cell is generally similar to a calculation manner of the change rate of the active set cell, and details are not described again. Certainly, two or more change rates may also be used to perform comprehensive determining, for example, the change rate of the primary serving cell and the change rate of the active set cell may be combined to perform comprehensive determining.

S1014. The terminal reports a final determining result to a base station.

In this example, comprehensive determining is performed with reference to a manner based on a moving speed and a manner based on a change rate of a primary serving cell, which may combine advantages of the two manners to some degree, and avoid disadvantages of the two manners, so as to improve accuracy of a determining result.

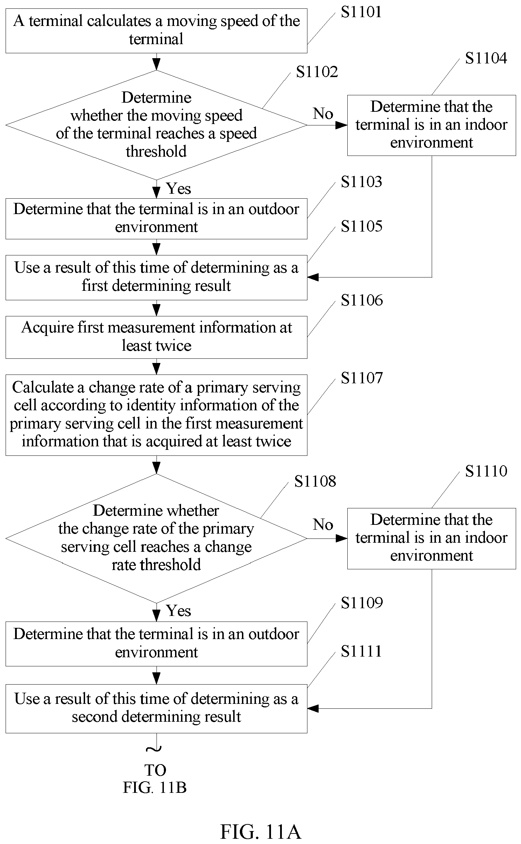

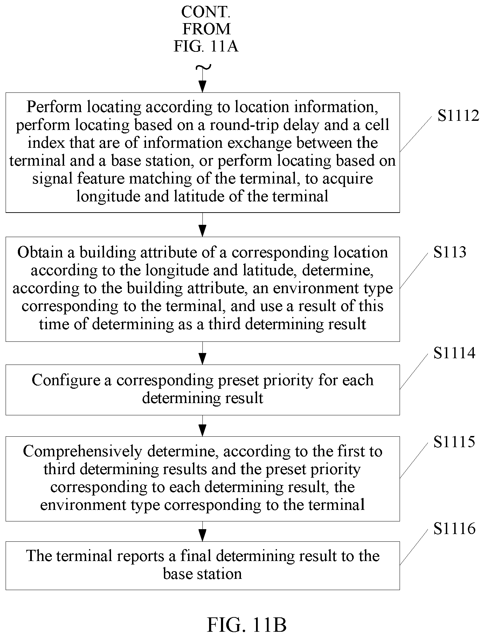

Referring to FIG. 11A and FIG. 11B, FIG. 11A and FIG. 11B are a schematic flowchart of a fifth example of another identification method according to the present invention. In this example, the method includes the following steps:
S1101. A terminal calculates a moving speed of the terminal.
S1102. Determine whether the moving speed of the terminal reaches a speed threshold; if yes, execute step S1103, and otherwise, execute step S1104.
S1103. Determine that the terminal is in an outdoor environment.
S1104. Determine that the terminal is in an indoor environment.
S505. With reference to steps S1103 and S1104, use a result of this time of determining as a first determining result.
S1106. Acquire first measurement information at least twice.
S1107. Calculate a change rate of a primary serving cell according to identity information of the primary serving cell in the first measurement information that is acquired at least twice.
S1108. Determine whether the change rate of the primary serving cell reaches a change rate threshold.
S1109. Determine that the terminal is in an outdoor environment.
S1110. Determine that the terminal is in an indoor environment.
S1111. With reference to steps S1109 and S1110, use a result of this time of determining as a second determining result.
S1112. Perform locating according to location information, perform locating based on a round-trip delay and a cell index (RTT-CELLID) that are of information exchange between the terminal and a base station, or perform locating based on signal feature matching of the terminal, to acquire longitude and latitude of the terminal.

The location information may be determined by using the GPS on the terminal or by using another location technology, such as a location technology based on a round-trip delay and a cell index (RTT-CELLID), or a location technology based on signal feature matching. A principle of the location technology based on signal feature matching is to create a signal feature database of the terminal at different spatial locations. When a terminal is being located, information about the terminal at a longitude and latitude location, such as level information and signal quality information, may be analyzed, and the information is compared with the created signal feature database to find a location that matches a signal feature; in this case, a location of the terminal can be determined, so as to obtain corresponding longitude and latitude of the terminal when the terminal and the base station are in a service connection state.

S1113. Obtain a building attribute of a corresponding location according to the longitude and latitude, determine, according to the building attribute, an environment type corresponding to the terminal, and use a result of this time of determining as a third determining result.

Specifically, data on building attributes of all longitude and latitude locations may be acquired by using a geographic information system (Geographic Information System, GIS for short), and these data are used to create a database in which the longitude and latitude are corresponding to the building attribute. When the longitude and latitude existing when the terminal and the base station are in the service connection state are obtained, the building attribute of the corresponding location may be obtained by means of database querying. For example, if a building attribute of a location corresponding to longitude 121.3549 and latitude 31.19152 is an urban open area, the environment type corresponding to the terminal is an outdoor environment, and a current service is an outdoor service; if the building attribute corresponding to the longitude and the latitude is a building, the environment type corresponding to the terminal is an indoor environment, and the current service is an indoor service. This identification manner has higher accuracy for identifying a service performed in a medium or large building or an outdoor open area.

S1114. Configure a corresponding preset priority for each determining result.

S1115. Comprehensively determine, according to the first to third determining results and the preset priority corresponding to each determining result, the environment type corresponding to the terminal.

S1116. The terminal reports a final determining result to the base station.

In this example three manners of identifying an environment type corresponding to a terminal are provided, which are respectively based on a moving speed, a change rate of a primary serving cell, and a geographic location. Different determining results may exist according to different identification manners. In this case, comprehensive determining may be performed by configuring preset priorities for results obtained in different manners, to improve accuracy of final determining. Certainly, the three identification manners may be combined for comprehensive use, or may be independently used.

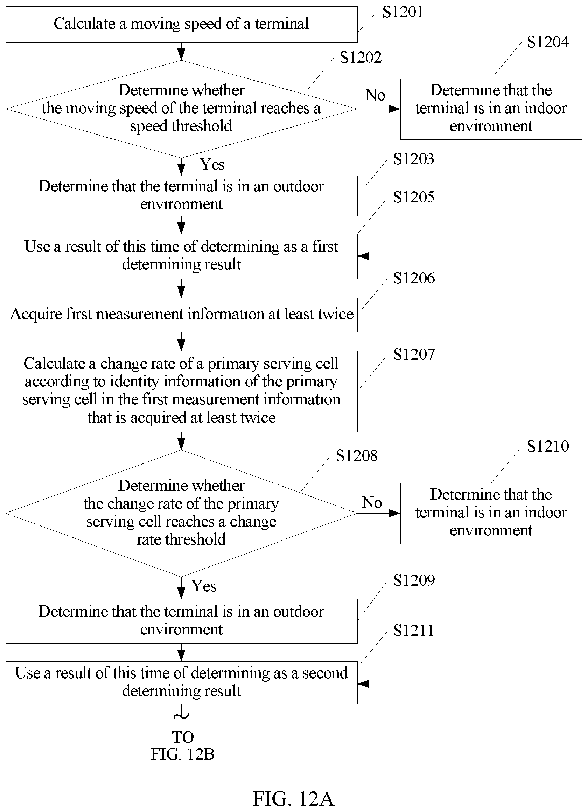

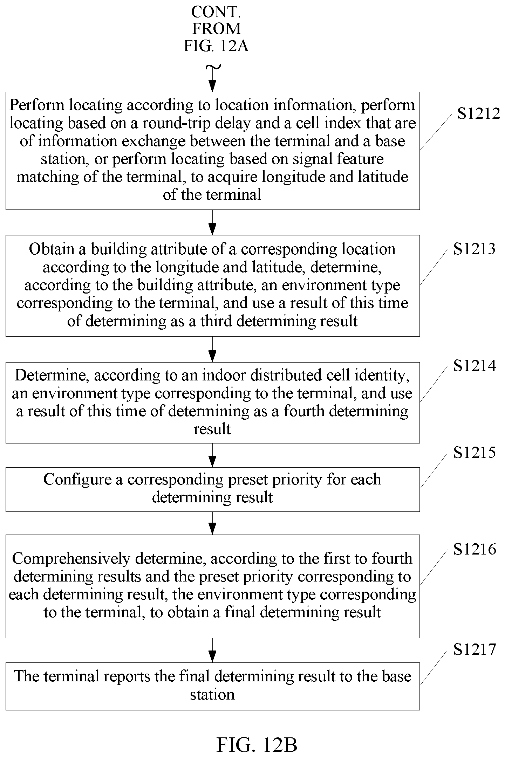

Referring to FIG. 12A and FIG. 12B, FIG. 12A and FIG. 12B are a schematic flowchart of a sixth example of another identification method according to the present invention. In this example, the method includes the following steps:
S1201. A terminal calculates a moving speed of the terminal.
S1202. Determine whether the moving speed of the terminal reaches a speed threshold; if yes, execute step S1203, and otherwise, execute step S1204.
S1203. Determine that the terminal is in an outdoor environment.
S1204. Determine that the terminal is in an indoor environment.
S1205. With reference to steps S1203 and S1204, use a result of this time of determining as a first determining result.
S1206. Acquire first measurement information at least twice.
S1207. Calculate a change rate of a primary serving cell according to identity information of the primary serving cell in the first measurement information that is acquired at least twice.
S1208. Determine whether the change rate of the primary serving cell reaches a change rate threshold.
S1209. Determine that the terminal is in an outdoor environment.
S1210. Determine that the terminal is in an indoor environment.
S1211. With reference to steps S1209 and S1210, use a result of this time of determining as a second determining result.
S1212. Perform locating according to location information, perform locating based on a round-trip delay and a cell index (RTT-CELLID) that are of information exchange between the terminal and a base station, or perform locating based on signal feature matching of the terminal, to acquire longitude and latitude of the terminal.
S1213. Obtain a building attribute of a corresponding location according to the longitude and latitude, determine, according to the building attribute, an environment type corresponding to the terminal, and use a result of this time of determining as a third determining result.
S1214. Determine, according to an indoor distributed cell identity, an environment type corresponding to the terminal, and use a result of this time of determining as a fourth determining result.
Specifically, third measurement information may be acquired, where the third measurement information may include the indoor distributed cell identity, and the indoor distributed cell identity is used to distinguish whether a cell in which the terminal is located is an indoor distributed cell or an outdoor distributed cell; the environment type corresponding to the terminal may be determined by using the indoor distributed cell identity.
S1215. Configure a corresponding preset priority for each determining result.
S1216. Comprehensively determine, according to the first to fourth determining results and the preset priority corresponding to each determining result, the environment type corresponding to the terminal, to obtain a final determining result.

In this example four identification manners are combined in total, and comprehensive determining is performed by using the four manners, which may greatly improve accuracy of determining, provide accurate data for an operator, facilitate subsequent network building, and improve business service quality. Certainly, the four identification manners may be freely combined for comprehensive use, or may be independently used. In addition to the four identification manners described in this example, another identification manner may further be combined, and a proper priority may be configured for the another identification manner to perform determining, for example, based on a level change of a cell.

S1217. The terminal reports the final determining result to the base station.

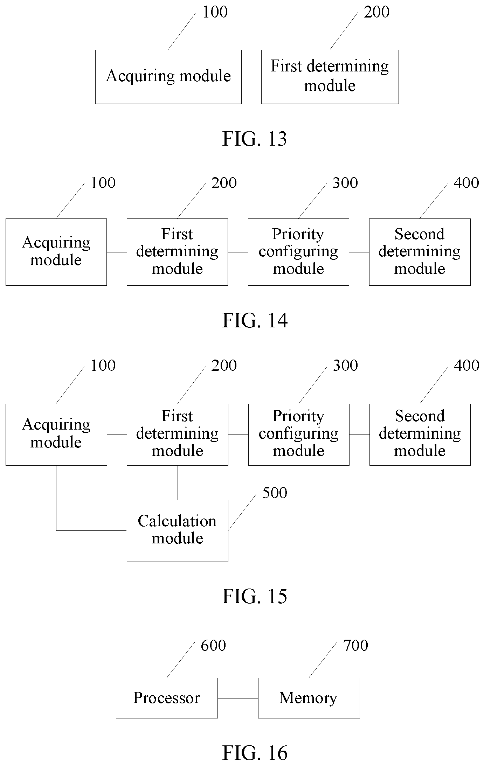

Referring to FIG. 13, FIG. 13 is a schematic composition diagram of a first example of an identification apparatus according to the present invention. In this example, the apparatus includes: an acquiring module 100 and a first determining module 200.

The acquiring module 100 is configured to acquire at least one type of the following information: a moving speed of a terminal, a change rate of a primary serving cell of the terminal, a building attribute corresponding to longitude and latitude of the terminal, and an indoor distributed cell identity of the terminal.

The first determining module 200 is configured to determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and a base station are in a service connection state, and the environment type includes an outdoor environment and an indoor environment.

Referring to FIG. 14, FIG. 14 is a schematic composition diagram of a second example of an identification apparatus according to the present invention. In this example, the apparatus includes: an acquiring module 100, a first determining module 200, a priority configuring module 200, and a second determining module 300.

The acquiring module 100 is configured to acquire at least one type of the following information: a moving speed of a terminal, a change rate of a primary serving cell of the terminal, a building attribute corresponding to longitude and latitude of the terminal, and an indoor distributed cell identity of the terminal.

The first determining module 200 is configured to determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and a base station are in a service connection state, and the environment type includes an outdoor environment and an indoor environment.

If the acquiring module 100 acquires at least two types of the following information: the moving speed of the terminal, the change rate of the primary serving cell of the terminal, the building attribute corresponding to the longitude and latitude of the terminal, and the indoor distributed cell identity of the terminal, the first determining module 200 is further configured to determine, separately according to each of the at least two types of information, an environment type corresponding to the terminal, to obtain at least two determining results.

The apparatus further includes:
The priority configuring module 300 is configured to configure a preset priority corresponding to each determining result of the at least two determining results.

The second determining module 400 is configured to comprehensively determine, according to the at least two determining results and the preset priority corresponding to each determining result, the environment type corresponding to the terminal.

Because there is an accuracy difference in the determining results that are obtained according to all types of the information, priorities may be configured for the determining results that are obtained according to different information, and then comprehensive determining is performed by combining the different determining results and the preset priorities corresponding to the different determining results, to obtain a more accurate final determining result. Specifically, the environment type corresponding to the terminal may be determined according to a determining result whose preset priority is the highest in the preset priorities that are respectively corresponding to the at least two determining results. For example, the first determining result is obtained by means of determining based on the moving speed and the second determining result is obtained by means of determining based on the change rate of the primary serving cell. Because accuracy of the determining based on the moving speed is higher than accuracy of the determining based on the change rate of the primary serving cell, a higher priority, for example, 6, may be configured for the first determining result, and a lower priority, for example, 4, may be configured for the second determining result. If it is determined, according to the first determining result, that the environment type corresponding to the terminal is an outdoor environment in this case, and it is determined, according to the second determining result, that the environment type corresponding to the terminal is an indoor environment in this case, the environment type corresponding to the terminal may be determined according to the first determining result whose corresponding preset priority is 6, that is, the final determining result is that an environment corresponding to the terminal is an outdoor environment in this case. If there are further a third determining result and a fourth determining result, corresponding priorities may be configured, and determining is performed according to a determining result whose preset priority is the highest in the first to fourth determining results, to obtain the final determining result. Alternatively, the preset priorities corresponding to all determining results of the at least two determining results may be accumulated, and the environment type corresponding to the terminal may be determined according to an accumulated result. For example, if a preset priority corresponding to the first determining result is 7, a preset priority corresponding to the second determining result is 5, a preset priority corresponding to the third determining result is 3, a preset priority corresponding to the fourth determining result is 1, the first determining result and the third determining result are the same, where it is determined that the environment type corresponding to the terminal is an outdoor environment, and the second determining result and the fourth determining result are the same, where it is determined that the environment type corresponding to the terminal is an indoor environment, the preset priorities corresponding to all determining results may be accumulated. Positive and negative values for different determining results may be accumulated, and in this case, the final determining result is determined by 7-5+3-1=4; therefore, the final determining result is that the environment type corresponding to the terminal is an outdoor environment. If an accumulated value is a negative value, the final determining result is that the environment type corresponding to the terminal is an indoor environment. Certainly, if the first determining result and the fourth determining result are the same, and the second determining result and the third determining result are the same, the final determining result is determined by 7-5-3+1=0 in this case, and therefore, the final determining result may be considered as that the environment type corresponding to the terminal is an outdoor environment or an indoor environment.

Referring to FIG. 15, FIG. 15 is a schematic composition diagram of a third example of an identification apparatus according to the present invention. In this example, the apparatus includes: an acquiring module 100, a first determining module 200, a priority configuring module 300, a second determining module 400, and a calculation module 500.

The acquiring module 100 is configured to acquire at least one type of the following information: a moving speed of a terminal, a change rate of a primary serving cell of the terminal, a building attribute corresponding to longitude and latitude of the terminal, and an indoor distributed cell identity of the terminal.

The first determining module 200 is configured to determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and a base station are in a service connection state, and the environment type includes an outdoor environment and an indoor environment.

If the acquiring module 100 acquires at least two types of the following information: the moving speed of the terminal, the change rate of the primary serving cell of the terminal, the building attribute corresponding to the longitude and latitude of the terminal, and the indoor distributed cell identity of the terminal, the first determining module 200 is further configured to determine, separately according to each of the at least two types of information, an environment type corresponding to the terminal, to obtain at least two determining results.

The priority configuring module 300 is configured to configure a preset priority corresponding to each determining result of the at least two determining results.

The second determining module 400 is configured to comprehensively determine, according to the at least two determining results and the preset priority corresponding to each determining result, the environment type corresponding to the terminal.

The apparatus further includes:
The calculation module 500 is configured to calculate the moving speed of the terminal.

The first determining module 200 is specifically configured to determine whether the moving speed of the terminal reaches a speed threshold; and
if yes, determine that the terminal is in an outdoor environment, and otherwise, determine that the terminal is in an indoor environment, and use a result of this time of determining as a first determining result.

The acquiring module 100 is specifically configured to acquire first measurement information of the terminal at least twice.

The first measurement information includes user identity information of the terminal and identity information of the primary serving cell of the terminal.

The calculation module 500 is further configured to calculate the change rate of the primary serving cell according to the identity information of the primary serving cell in the first measurement information that is acquired at least twice.

The first determining module 200 is specifically configured to determine whether the change rate of the primary serving cell reaches a change rate threshold; and
if yes, determine that the terminal is in an outdoor environment, and otherwise, determine that the terminal is in an indoor environment, and use a result of this time of determining as a second determining result.

The acquiring module 100 is specifically configured to acquire second measurement information of the terminal, where the second measurement information includes the user identity information of the terminal and location information of the terminal; and
perform locating according to the location information, perform locating based on a round-trip delay and a cell index (RTT-CELLID) that are of information exchange between the terminal and the base station, or perform locating based on signal feature matching of the terminal, to acquire the longitude and latitude of the terminal.

The first determining module 200 is specifically configured to: obtain the building attribute of a corresponding location according to the longitude and latitude, determine, according to the building attribute, the environment type corresponding to the terminal, and use a result of this time of determining as a third determining result.

The acquiring module 100 is specifically configured to acquire third measurement information of the terminal, where the third measurement information includes the user identity information of the terminal and the indoor distributed cell identity of the terminal, and the indoor distributed cell identity is used to distinguish whether a cell corresponding to the terminal is an indoor distributed cell or an outdoor distributed cell.

The first determining module 200 is specifically configured to: determine, according to the indoor distributed cell identity, the environment type corresponding to the terminal, and use a result of this time of determining as a fourth determining result.

The priority configuring module 300 is specifically configured to configure a preset priority corresponding to each determining result of the first determining result, the second determining result, the third determining result, and the fourth determining result.

The second determining module 400 is specifically configured to comprehensively determine, according to the first determining result, the second determining result, the third determining result, the fourth determining result, and the preset priority corresponding to each determining result, the environment type corresponding to the terminal.

The calculation module 500 is specifically configured to:
acquire fourth measurement information of the terminal at least twice, where the fourth measurement information includes the user identity information of the terminal, time information of the terminal, and the location information of the terminal, and calculate the moving speed of the terminal according to the time information of the terminal and the location information of the terminal; or
calculate the moving speed of the terminal in a Doppler frequency shift manner.

The first determining module 200 is specifically configured to:
determine whether an average moving speed of the terminal within entire time or a preset time reaches the speed threshold, where the terminal and the base station are in the service connection state within the entire time or the preset time; or
determine whether a quantity of times that an instantaneous moving speed of the terminal reaches the speed threshold within entire time or a preset time reaches a preset quantity, where the terminal and the base station are in the service connection state within the entire time or the preset time.

The user identity information may be an IMSI, a TMSI, a P-TMSI, or the like, and is used to identify the service. Preferably, the fourth measurement information may be acquired periodically, which helps to collect statistics on a time and also helps to calculate an average moving speed or an instantaneous moving speed within a consecutive period of time. A period for acquiring the fourth measurement information may be set to be relatively short, for example, 2 pieces/second. In this way, a problem that round-trip movement, between two points, of the terminal causes inaccurate distance data obtained according to the location information may be avoided to some degree. The location information of the terminal may be determined and reported by using the Global Positioning System (Global Positioning System, GPS for short) on the terminal, or the location information of the terminal may be determined by using another location technology, such as a location technology based on a round-trip delay and a cell index that are of information exchange between the terminal and the base station, or a location technology based on signal feature matching of the terminal. A principle of the location technology based on signal feature matching of the terminal is to create a signal feature database of the terminal at different spatial locations. When a terminal is being located, information, such as level information and signal quality information, reported by the terminal at a longitude and latitude location may be analyzed, and the information is compared with the created signal feature database to find a location that matches a signal feature; in this case, a location of the terminal can be determined, so as to obtain longitude and latitude of the terminal when the terminal is in a call. The time information may be information about an absolute time that is the same as a regular time; or a time point for receiving the fourth measurement information for the first time may be used as a reference, and information about a relative time may be acquired from subsequent fourth measurement information. Then the moving speed of the terminal is calculated according to the location information and the time information in the acquired fourth measurement information. For example, if a user is at a location a at a moment A and arrives at a location b at a moment B, a moving speed of a terminal within a time period between A and B is (b-a)/(B-A). Certainly, the moving speed of the terminal may also be directly calculated on a base station side in a Doppler frequency shift manner.

Specifically, during the determining, it may be determined whether an average moving speed of the terminal within entire time or a preset time reaches the speed threshold, where the terminal and the base station are in the service connection state within the entire time or the preset time; or
it may be determined whether a quantity of times that an instantaneous moving speed of the terminal reaches the speed threshold within entire time or a preset time reaches a preset quantity, where the terminal and the base station are in the service connection state within the entire time or the preset time.

For the average moving speed, any two moments and location information corresponding to the any two moments may be selected for calculation. For the instantaneous moving speed, the instantaneous moving speed refers to a moving speed at a moment, and a timescale may be determined as a benchmark for calculation. For example, Is is determined as a benchmark for calculating the instantaneous moving speed, and a time period during which a user and the base station are in a service connection state is N seconds. If within the N seconds, an instantaneous moving speed of the user reaches a speed threshold, for example, 10 km/s for L seconds, that is, the moving speed of the user reaches the speed threshold ten times within the N seconds, it may be determined that the terminal is moving quickly, an environment corresponding to the terminal is an outdoor environment, and a service performed by the terminal is an outdoor service; otherwise, the service performed by the terminal is an indoor service. When the service is being performed, if the terminal is located indoors or inside a building, the service may be referred to as an indoor service; when the service is being performed, the terminal is located outdoors or outside a building, the service may be referred to as an outdoor service. Certainly, one speed threshold may be set herein, or two speed thresholds may be set specific for an upper limit and a lower limit of the moving speed of the terminal. For example, if the upper limit is set to 10 km/h, and the average moving speed reaches 10 km/h or the instantaneous moving speed reaches 10 km/h for ten or more times, it is determined that the terminal is in an outdoor environment and the service is an outdoor service; if the lower limit is set to 0.5 km/h, and the average moving speed is lower than 0.5 km/h or the instantaneous moving speed is lower than 0.5 km/h for ten or more times, it is determined that the terminal is in an indoor environment and the service is an indoor service. For a speed interval between 0.5 km/h and 10 km/h, identification may be performed in another identification manner, for example, an identification manner based on an indoor distributed system.

The second determining module 400 is specifically configured to:
determine, according to a determining result whose preset priority is the highest in the preset priorities that are respectively corresponding to the at least two determining results, the environment type corresponding to the terminal; or
accumulate the preset priorities corresponding to all determining results of the at least two determining results, and determine, according to an accumulated result, the environment type corresponding to the terminal.

The acquiring module 100, the first determining module 200, the priority configuring module 300, the second determining module 400, and the calculation module 500 above may be independently disposed in a hardware form or disposed by means of integration. During disposing by means of integration, a disposing form may be a microprocessor form. Alternatively, the foregoing modules may be built into a processor in a hardware form, or may be stored in a memory in a software form, so that the processor invokes and performs an operation corresponding to each of the foregoing modules.

Referring to FIG. 16, FIG. 16 is a schematic composition diagram of a fourth example of an identification apparatus according to the present invention. In this example, the apparatus includes: a processor 600, and a memory 700 that cooperates with the processor 600.

The memory 700 is configured to store program code executed by the processor, and the processor is configured to invoke the program code in the memory 600, and execute an operation in any one of the first to sixth examples of the identification method in the present invention.

Accordingly, an embodiment of the present invention further includes a network device, and the network device may include the identification apparatus in any one of the first to fourth embodiments of the identification apparatus in the present invention. The identification apparatus may be a part of the network device or may be the network device, and the identification apparatus may be independently disposed inside the network device in a hardware form or may be disposed by integrating with another module in the network device. During disposing by means of integration, a disposing form may be a microprocessor form. Alternatively, the identification apparatus may be built into a processor of the network device in a hardware form, or may be stored in a memory of the network device in a software form, so that the processor invokes and performs an identification operation corresponding to the identification apparatus. For example, the network device may be a base station, and the identification apparatus may be integrated into the base station in a hardware or software manner, so that the base station implements identification of an environment type corresponding to a terminal. Certainly, the network device may further be a network element, or the like, and may acquire necessary information by communicating with the base station and the terminal, to perform determining and identification.

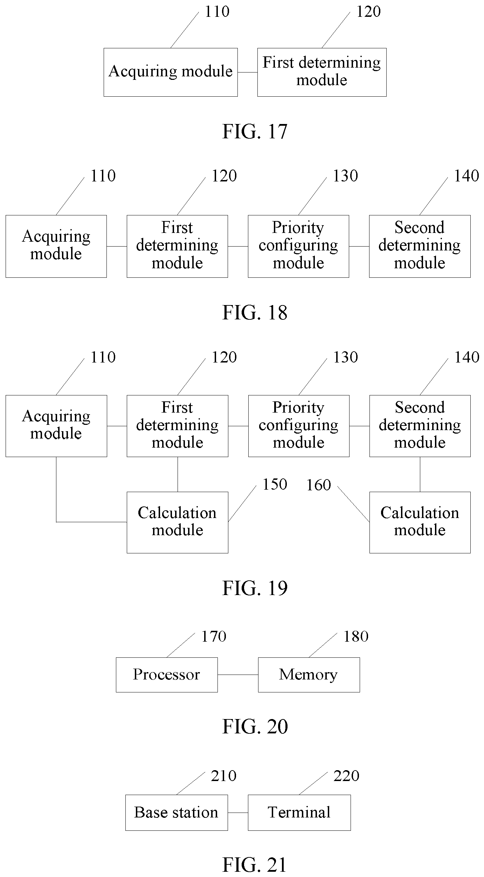

Referring to FIG. 17, FIG. 17 is a schematic composition diagram of a first example of a terminal according to the present invention. In this example, the terminal includes: an acquiring module 110 and a first determining module 120.

The acquiring module 110 is configured to acquire at least one type of the following information: a moving speed of the terminal, a change rate of a primary serving cell of the terminal, a building attribute corresponding to longitude and latitude of the terminal, and an indoor distributed cell identity of the terminal.

The first determining module 120 is configured to determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and a base station are in a service connection state, and the environment type includes an outdoor environment and an indoor environment.

Certainly, in this example, the terminal may further include a reporting module, configured to report a final determining result to the base station. In this way, after identifying the environment type corresponding to the terminal, the terminal may notify an operator of the result, which makes it convenient for the operator to learn a macro ratio of indoor services to outdoor services according to the environment type corresponding to the terminal, clearly know an indoor coverage blind spot and a changing trend of the indoor services, and the like, so as to provide a sound basis for the operator to improve business service quality. Therefore, after acquiring various types of information to obtain the final determining result, the terminal needs to report the final determining result to the base station, so that the operator collects statistics on a proportion of services and properly deploys a communications network.

Referring to FIG. 18, FIG. 18 is a schematic composition diagram of a second example of an identification apparatus according to the present invention. In this example, the terminal includes: an acquiring module 110, a first determining module 120, a priority configuring module 130, and a second determining module 140.

The acquiring module 110 is configured to acquire at least one type of the following information: a moving speed of the terminal, a change rate of a primary serving cell of the terminal, a building attribute corresponding to longitude and latitude of the terminal, and an indoor distributed cell identity of the terminal.

The first determining module 120 is configured to determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and a base station are in a service connection state, and the environment type includes an outdoor environment and an indoor environment.

If the acquiring module 110 acquires at least two types of the following information: the moving speed of the terminal, the change rate of the primary serving cell of the terminal, the building attribute corresponding to the longitude and latitude of the terminal, and the indoor distributed cell identity of the terminal, the first determining module 200 is further configured to determine, separately according to each of the at least two types of information, an environment type corresponding to the terminal, to obtain at least two determining results.

The terminal further includes:
The priority configuring module 130 is configured to configure a preset priority corresponding to each determining result of the at least two determining results.

The second determining module 140 is configured to comprehensively determine, according to the at least two determining results and the preset priority corresponding to each determining result, the environment type corresponding to the terminal.

Because there is an accuracy difference in the determining results that are obtained according to all types of the information, priorities may be configured for the determining results that are obtained according to different information, and then comprehensive determining is performed by combining the different determining results and the preset priorities corresponding to the different determining results, to obtain a more accurate final determining result. Specifically, the environment type corresponding to the terminal may be determined according to a determining result whose preset priority is the highest in the preset priorities that are respectively corresponding to the at least two determining results. For example, the first determining result is obtained by means of determining based on the moving speed and the second determining result is obtained by means of determining based on the change rate of the primary serving cell. Because accuracy of the determining based on the moving speed is higher than accuracy of the determining based on the change rate of the primary serving cell, a higher priority, for example, 6, may be configured for the first determining result, and a lower priority, for example, 4, may be configured for the second determining result. If it is determined, according to the first determining result, that the environment type corresponding to the terminal is an outdoor environment in this case, and it is determined, according to the second determining result, that the environment type corresponding to the terminal is an indoor environment in this case, the environment type corresponding to the terminal may be determined according to the first determining result whose corresponding preset priority is 6, that is, the final determining result is that an environment corresponding to the terminal is an outdoor environment in this case. If there are further a third determining result and a fourth determining result, corresponding priorities may be configured, and determining is performed according to a determining result whose preset priority is the highest in the first to fourth determining results, to obtain the final determining result. Alternatively, the preset priorities corresponding to all determining results of the at least two determining results may be accumulated, and the environment type corresponding to the terminal may be determined according to an accumulated result. For example, if a preset priority corresponding to the first determining result is 7, a preset priority corresponding to the second determining result is 5, a preset priority corresponding to the third determining result is 3, a preset priority corresponding to the fourth determining result is 1, the first determining result and the third determining result are the same, where it is determined that the environment type corresponding to the terminal is an outdoor environment, and the second determining result and the fourth determining result are the same, where it is determined that the environment type corresponding to the terminal is an indoor environment, the preset priorities corresponding to all determining results may be accumulated. Positive and negative values for different determining results may be accumulated, and in this case, the final determining result is determined by 7-5+3-1=4; therefore, the final determining result is that the environment type corresponding to the terminal is an outdoor environment. If an accumulated value is a negative value, the final determining result is that the environment type corresponding to the terminal is an indoor environment. Certainly, if the first determining result and the fourth determining result are the same, and the second determining result and the third determining result are the same, the final determining result is determined by 7-5-3+1=0 in this case, and therefore, the final determining result may be considered as that the environment type corresponding to the terminal is an outdoor environment or an indoor environment.

Certainly, in this example, the terminal may further include a reporting module, configured to report the final determining result to the base station.

Referring to FIG. 19, FIG. 19 is a schematic composition diagram of a third example of a terminal according to the present invention. In this example, the terminal includes: an acquiring module 110, a first determining module 120, a priority configuring module 130, a second determining module 140, a calculation module 150, and a reporting module 160.

The acquiring module 110 is configured to acquire at least one type of the following information: a moving speed of the terminal, a change rate of a primary serving cell of the terminal, a building attribute corresponding to longitude and latitude of the terminal, and an indoor distributed cell identity of the terminal.

The first determining module 120 is configured to determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal.

The terminal and a base station are in a service connection state, and the environment type includes an outdoor environment and an indoor environment.

If the acquiring module 110 acquires at least two types of the following information: the moving speed of the terminal, the change rate of the primary serving cell of the terminal, the building attribute corresponding to the longitude and latitude of the terminal, and the indoor distributed cell identity of the terminal, the first determining module 120 is further configured to determine, separately according to each of the at least two types of information, an environment type corresponding to the terminal, to obtain at least two determining results.

The priority configuring module 130 is configured to configure a preset priority corresponding to each determining result of the at least two determining results.

The second determining module 140 is configured to comprehensively determine, according to the at least two determining results and the preset priority corresponding to each determining result, the environment type corresponding to the terminal.

The calculation module 150 is configured to calculate the moving speed of the terminal.

The first determining module 120 is specifically configured to determine whether the moving speed of the terminal reaches a speed threshold; and
if yes, determine that the terminal is in an outdoor environment, and otherwise, determine that the terminal is in an indoor environment, and use a result of this time of determining as a first determining result.

The acquiring module 110 is specifically configured to acquire first measurement information of the terminal at least twice, where the first measurement information includes user identity information of the terminal and identity information of the primary serving cell of the terminal.

The calculation module 150 is further configured to calculate the change rate of the primary serving cell according to the identity information of the primary serving cell in the first measurement information that is acquired at least twice.

The first determining module 120 is specifically configured to determine whether the change rate of the primary serving cell reaches a change rate threshold; and
if yes, determine that the terminal is in an outdoor environment, and otherwise, determine that the terminal is in an indoor environment, and use a result of this time of determining as a second determining result.

The acquiring module 110 is specifically configured to acquire second measurement information of the terminal, where the second measurement information includes the user identity information of the terminal and location information of the terminal; and
perform locating according to the location information, perform locating based on a round-trip delay and a cell index (RTT-CELLID) that are of information exchange between the terminal and the base station, or perform locating based on signal feature matching of the terminal, to acquire the longitude and latitude of the terminal.

The first determining module 120 is specifically configured to: obtain the building attribute of a corresponding location according to the longitude and latitude, determine, according to the building attribute, the environment type corresponding to the terminal, and use a result of this time of determining as a third determining result.

The acquiring module 110 is specifically configured to acquire third measurement information of the terminal, where the third measurement information includes the user identity information of the terminal and the indoor distributed cell identity of the terminal, and the indoor distributed cell identity is used to distinguish whether a cell corresponding to the terminal is an indoor distributed cell or an outdoor distributed cell.

The first determining module 120 is specifically configured to: determine, according to the indoor distributed cell identity, the environment type corresponding to the terminal, and use a result of this time of determining as a fourth determining result.

The priority configuring module 130 is specifically configured to configure a preset priority corresponding to each determining result of the first determining result, the second determining result, the third determining result, and the fourth determining result.

The second determining module 140 is specifically configured to comprehensively determine, according to the first determining result, the second determining result, the third determining result, the fourth determining result, and the preset priority corresponding to each determining result, the environment type corresponding to the terminal.

The calculation module 150 is specifically configured to:
acquire fourth measurement information of the terminal at least twice, where the fourth measurement information includes the user identity information of the terminal, time information of the terminal, and the location information of the terminal, and calculate the moving speed of the terminal according to the time information of the terminal and the location information of the terminal; or
calculate the moving speed of the terminal in a Doppler frequency shift manner.

The first determining module 120 is specifically configured to:
determine whether an average moving speed of the terminal within entire time or a preset time reaches the speed threshold, where the terminal and the base station are in the service connection state within the entire time or the preset time; or
determine whether a quantity of times that an instantaneous moving speed of the terminal reaches the speed threshold within entire time or a preset time reaches a preset quantity, where the terminal and the base station are in the service connection state within the entire time or the preset time.

The second determining module 140 is specifically configured to:
determine, according to a determining result whose preset priority is the highest in the preset priorities that are respectively corresponding to the at least two determining results, the environment type corresponding to the terminal; or
accumulate the preset priorities corresponding to all determining results of the at least two determining results, and determine, according to an accumulated result, the environment type corresponding to the terminal.

The reporting module 160 is configured to report a final determining result to the base station.

The acquiring module 110, the first determining module 120, the priority configuring module 130, the second determining module 140, the calculation module 150, and the reporting module 160 above may be independently disposed in a hardware form or disposed by means of integration. During disposing by means of integration, a disposing form may be a microprocessor form. Alternatively, the foregoing modules may be built into a processor in a hardware form, or may be stored in a memory in a software form, so that the processor invokes and performs an operation corresponding to each of the foregoing modules.

Referring to FIG. 20, FIG. 20 is a schematic composition diagram of a fourth example of a terminal according to the present invention. In this example, the apparatus includes: a processor 170, and a memory 180 that cooperates with the processor 170.

The memory 170 is configured to store program code executed by the processor, and the processor is configured to invoke the program code in the memory 180, and execute an operation in any one of the first to sixth examples of the another identification method in the present invention.

Referring to FIG. 21, FIG. 21 is a schematic composition diagram of a network system according to an example of the present invention. In this example, the system includes a base station and the terminal according to any embodiment of the first to fourth examples of the terminal in the present invention. The terminal determines a corresponding environment type when the terminal is in a service connection state, and reports the environment type to the base station, so that an operator can learn a macro ratio of indoor services to outdoor services according to the environment type corresponding to the terminal, clearly know an indoor coverage blind spot and a changing trend of the indoor services, and the like, thereby providing a sound basis for the operator to improve business service quality.

It should be noted that the embodiments of this specification are described in a progressive manner. A description of each embodiment focuses on its difference from another embodiment. For same or similar parts of the embodiments, mutual reference may be made. For an apparatus embodiment, the apparatus embodiment is described briefly because it is basically similar to the method embodiment, and, for a related part, reference may be made to a related description of the method embodiment.

According to the description of the foregoing embodiments, the present invention has the following advantages:
A type of an environment in which a terminal is located is determined by using one or more types of information about the terminal, where the terminal and a base station are in a service connection state, so that the environment type corresponding to the terminal can be accurately determined, which helps an operator to learn a macro ratio of indoor services to outdoor services according to the environment type corresponding to the terminal, clearly know an indoor coverage blind spot and a changing trend of the indoor services, and the like, thereby providing a sound basis for the operator to improve business service quality.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM for short), or a random access memory (Random Access Memory, RAM for short).

## Claims

1. An identification method, comprising:
acquiring (S101) at least one type of the following information: a moving speed of a terminal, a change rate of a primary serving cell of the terminal, a building attribute corresponding to longitude and latitude of the terminal, and an indoor distributed cell identity of the terminal; and
determining (S102), according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal,
wherein the determining (S102) comprising:
at least two types of the following information are acquired (S201): the moving speed of the terminal, the change rate of the primary serving cell of the terminal, the building attribute corresponding to the longitude and latitude of the terminal, and the indoor distributed cell identity of the terminal, determining (S202), separately according to each of the at least two types of information, an environment type corresponding to the terminal, to obtain at least two determining results; configuring (S203) a corresponding preset priority for each determining result; and comprehensively determining, according to the at least two determining results and the preset priority corresponding to each determining result, the environment type corresponding to the terminal,
wherein the terminal and a base station are in a service connection state, and the environment type comprises an outdoor environment and an indoor environment;
**characterized by** the determining (S202), separately according to each of the at least two types of information, an environment type corresponding to the terminal, to obtain at least two determining results; configuring (S203) a corresponding preset priority for each determining result; and comprehensively determining, according to the at least two determining results and the preset priority corresponding to each determining result, the environment type corresponding to the terminal comprises:
wherein the determining, according to the moving speed of the terminal, an environment type corresponding to the terminal comprises:
calculating (S601) the moving speed of the terminal;
determining (S602) whether the moving speed of the terminal reaches a speed threshold; and
if the moving speed of the terminal reaches the speed threshold, determining (S603) that the terminal is in an outdoor environment, and if the moving speed of the terminal does not reach the speed threshold, determining (S604) that the terminal is in an indoor environment, and using (S605) a result of this time of determining as a first determining result;
the determining, according to the change rate of the primary serving cell of the terminal, an environment type corresponding to the terminal comprises:
acquiring (S606) first measurement information of the terminal at least twice, wherein the first measurement information comprises user identity information of the terminal and identity information of the primary serving cell of the terminal;
calculating (S607) the change rate of the primary serving cell according to the identity information of the primary serving cell in the first measurement information that is acquired at least twice;
determining (S608) whether the change rate of the primary serving cell reaches a change rate threshold; and
if the change rate of the primary serving cell reaches the change rate, determining (S609) that the terminal is in an outdoor environment, and if the change rate of the primary serving cell does not reach the change rate threshold, determining (S610) that the terminal is in an indoor environment, and using (S611) a result of this time of determining as a second determining result;
the determining, according to the building attribute corresponding to the longitude and latitude of the terminal, an environment type corresponding to the terminal comprises:
acquiring second measurement information of the terminal, wherein the second measurement information comprises the user identity information of the terminal and location information of the terminal;
performing (S612) locating according to the location information, performing locating based on a round-trip time, RTT, and a cell index that are of information exchange between the terminal and the base station, or performing locating based on signal feature matching of the terminal, to acquire the longitude and latitude of the terminal; and
obtaining (S613) the building attribute of a corresponding location according to the longitude and latitude, determining, according to the building attribute, the environment type corresponding to the terminal, and using a result of this time of determining as a third determining result; and
the determining, according to the indoor distributed cell identity of the terminal, an environment type corresponding to the terminal comprises:
acquiring third measurement information of the terminal, wherein the third measurement information comprises the user identity information of the terminal and the indoor distributed cell identity of the terminal, and the indoor distributed cell identity is used to distinguish whether a cell corresponding to the terminal is an indoor distributed cell or an outdoor distributed cell;
determining (S614), according to the indoor distributed cell identity, the environment type corresponding to the terminal, and using a result of this time of determining as a fourth determining result; and
configuring (S615) a preset priority corresponding to each determining result of the first determining result, the second determining result, the third determining result, and the fourth determining result, and comprehensively (S616) determining, according to the first determining result, the second determining result, the third determining result, the fourth determining result, and the preset priority corresponding to each determining result, the environment type corresponding to the terminal.

2. The method according to claim 1, wherein the calculating (S601) the moving speed of the terminal comprises:
acquiring fourth measurement information of the terminal at least twice, wherein the fourth measurement information comprises the user identity information of the terminal, time information of the terminal, and the location information of the terminal, and calculating the moving speed of the terminal according to the time information of the terminal and the location information of the terminal; or
calculating the moving speed of the terminal in a Doppler frequency shift manner.

3. The method according to claim 1, wherein the determining (S602) whether the moving speed of the terminal reaches a speed threshold comprises:
determining whether an average moving speed of the terminal within entire time or a preset time reaches the preset speed threshold, wherein the terminal and the base station are in the service connection state within the entire time or the preset time; or
determining whether a quantity of times that an instantaneous moving speed of the terminal reaches the speed threshold within entire time or a preset time reaches a preset quantity, wherein the terminal and the base station are in the service connection state within the entire time or the preset time.

4. The method according to any one of claims 1 to 3, wherein if the method is executed by the terminal, the method further comprises: reporting (S1217), by the terminal, a final result to the base station.

5. An identification apparatus, comprising:
an acquiring module (100), configured to acquire at least one type of the following information: a moving speed of a terminal, a change rate of a primary serving cell of the terminal, a building attribute corresponding to longitude and latitude of the terminal, and an indoor distributed cell identity of the terminal, wherein if the acquiring module (100) acquires at least two types of the following information: the moving speed of the terminal, the change rate of the primary serving cell of the terminal, the building attribute corresponding to the longitude and latitude of the terminal; and
a first determining module (200), configured to determine, according to the at least one type of the following information: the moving speed of the terminal, the change rate of the primary serving cell of the terminal, the building attribute corresponding to the longitude and latitude of the terminal, and the indoor distributed cell identity of the terminal, an environment type corresponding to the terminal, the first determining module (200) is further configured to determine, separately according to each of the at least two types of information, an environment type corresponding to the terminal, to obtain at least two determining results; and
the apparatus further comprises:
a priority configuring module (300), configured to configure a preset priority corresponding to each determining result of the at least two determining results; and
a second determining module (400), configured to comprehensively determine, according to the at least two determining results and the preset priority corresponding to each determining result, the environment type corresponding to the terminal,
wherein the terminal and a base station are in a service connection state, and the environment type comprises an outdoor environment and an indoor environment;
**characterized by** further comprising:
a calculation module (500), configured to calculate the moving speed of the terminal, wherein
the first determining module (200) is specifically configured to determine whether the moving speed of the terminal reaches a speed threshold; and
if yes, determine that the terminal is in an outdoor environment, and otherwise, determine that the terminal is in an indoor environment, and use a result of this time of determining as a first determining result;
the acquiring module (100) is specifically configured to acquire first measurement information of the terminal at least twice, wherein the first measurement information comprises user identity information of the terminal and identity information of the primary serving cell of the terminal;
the calculation module (500) is further configured to calculate the change rate of the primary serving cell according to the identity information of the primary serving cell in the first measurement information that is acquired at least twice;
the first determining module (200) is specifically configured to determine whether the change rate of the primary serving cell reaches a change rate threshold; and
if yes, determine that the terminal is in an outdoor environment, and otherwise, determine that the terminal is in an indoor environment, and use a result of this time of determining as a second determining result;
the acquiring module (100) is specifically configured to acquire second measurement information of the terminal, wherein the second measurement information comprises the user identity information of the terminal and location information of the terminal; and
perform locating according to the location information, perform locating based on a round-trip time, RTT, and a cell index that are of information exchange between the terminal and the base station, or perform locating based on signal feature matching of the terminal, to acquire the longitude and latitude of the terminal;
the first determining module (200) is specifically configured to: obtain the building attribute of a corresponding location according to the longitude and latitude, determine, according to the building attribute, the environment type corresponding to the terminal, and use a result of this time of determining as a third determining result;
the acquiring module (100) is specifically configured to acquire third measurement information of the terminal, wherein the third measurement information comprises the user identity information of the terminal and the indoor distributed cell identity of the terminal, and the indoor distributed cell identity is used to distinguish whether a cell corresponding to the terminal is an indoor distributed cell or an outdoor distributed cell;
the first determining module (200) is specifically configured to: determine, according to the indoor distributed cell identity, the environment type corresponding to the terminal, and use a result of this time of determining as a fourth determining result;
the priority configuring module (300) is specifically configured to configure a preset priority corresponding to each determining result of the first determining result, the second determining result, the third determining result, and the fourth determining result; and
the second determining module (400) is specifically configured to comprehensively determine, according to the first determining result, the second determining result, the third determining result, the fourth determining result, and the preset priority corresponding to each determining result, the environment type corresponding to the terminal.

6. The apparatus according to claim 5, wherein the calculation module (500) is specifically configured to:
acquire fourth measurement information of the terminal at least twice, wherein the fourth measurement information comprises the user identity information of the terminal, time information of the terminal, and the location information of the terminal, and calculate the moving speed of the terminal according to the time information of the terminal and the location information of the terminal; or
calculate the moving speed of the terminal in a Doppler frequency shift manner.

7. The apparatus according to claim 5, wherein the first determining module (200) is specifically configured to:
determine whether an average moving speed of the terminal within entire time or a preset time reaches the speed threshold, wherein the terminal and the base station are in the service connection state within the entire time or the preset time; or
determine whether a quantity of times that an instantaneous moving speed of the terminal reaches the speed threshold within entire time or a preset time reaches a preset quantity, wherein the terminal and the base station are in the service connection state within the entire time or the preset time.

8. The apparatus according to any one of claims 5 to 7, wherein the apparatus is a terminal (220), and the terminal (220) further comprises:
a reporting module, configured to report a final determining result to the base station (210).

9. A network system, **characterized by** comprising a base station (210) and the apparatus according to any one of claims 5 to 8.

## Patentansprüche

1. Identifikationsverfahren, das Folgendes umfasst:
Erfassen (S101) mindestens eines Typs der folgenden Daten: eine Bewegungsgeschwindigkeit eines Endgerätes, eine Änderungsrate einer primären bedienenden Zelle des Endgerätes, eine Gebäudeeigenschaft, die dem Längengrad und dem Breitengrad des Endgerätes entspricht, und eine im Gebäude verteilte Zellidentität des Endgerätes; und
Bestimmen (S102) eines Umgebungstyps, der dem Endgerät entspricht, gemäß dem mindestens einen Typ der folgenden Daten: der Bewegungsgeschwindigkeit des Endgerätes, der Änderungsrate der primären bedienenden Zelle des Endgerätes, der Gebäudeeigenschaft, die dem Längengrad und dem Breitengrad des Endgerätes entspricht, und der im Gebäude verteilten Zellidentität des Endgerätes,
wobei das Bestimmen (S102) Folgendes umfasst:
mindestens zwei Typen der folgenden Daten werden erfasst (S201): die Bewegungsgeschwindigkeit des Endgerätes, die Änderungsrate der primären bedienenden Zelle des Endgerätes, die Gebäudeeigenschaft, die dem Längengrad und dem Breitengrad des Endgerätes entspricht, und die im Gebäude verteilte Zellidentität des Endgerätes, Bestimmen (S202) einzeln gemäß jedem der mindestens zwei Typen von Daten eines Umgebungstyps, der dem Endgerät entspricht, um mindestens zwei Bestimmungsergebnisse zu erhalten; Konfigurieren (S203) einer entsprechenden voreingestellten Priorität für jedes Bestimmungsergebnis; und umfassendes Bestimmen des Umgebungstyps, der dem Endgerät entspricht, gemäß den mindestens zwei Bestimmungsergebnissen und der voreingestellten Priorität, die jedem Bestimmungsergebnis entspricht,
wobei sich das Endgerät und eine Basisstation in einem Dienstverbindungszustand befinden und der Umgebungstyp eine Außenumgebung und eine Innenumgebung umfasst;
**gekennzeichnet durch** das Bestimmen (S202) eines Umgebungstyps, der dem Endgerät entspricht, einzeln gemäß jedem der mindestens zwei Typen von Daten, um mindestens zwei Bestimmungsergebnisse zu erhalten; das Konfigurieren (S203) einer entsprechenden voreingestellten Priorität für jedes Bestimmungsergebnis und umfassendes Bestimmen des Umgebungstyps, der dem Endgerät entspricht, gemäß den mindestens zwei Bestimmungsergebnissen und der voreingestellten Priorität, die jedem Bestimmungsergebnis entspricht;
wobei das Bestimmen eines Umgebungstyps, der dem Endgerät entspricht, gemäß der Bewegungsgeschwindigkeit des Endgerätes Folgendes umfasst:
Berechnen (S601) der Bewegungsgeschwindigkeit des Endgerätes;
Bestimmen (S602), ob die Bewegungsgeschwindigkeit des Endgerätes einen Geschwindigkeitsschwellenwert erreicht; und
Bestimmen (S603), dass sich das Endgerät in einer Außenumgebung befindet, wenn die Bewegungsgeschwindigkeit des Endgerätes den Geschwindigkeitsschwellenwert erreicht, Bestimmen (S604), dass sich das Endgerät in einer Innenumgebung befindet, wenn die Bewegungsgeschwindigkeit des Endgerätes den Geschwindigkeitsschwellenwert nicht erreicht, und Verwenden (S605) eines Ergebnisses dieses Males des Bestimmens als ein erstes Bestimmungsergebnis;
das Bestimmen eines Umgebungstyps, der dem Endgerät entspricht, gemäß der Änderungsrate der primären bedienenden Zelle des Endgerätes Folgendes umfasst:
Erfassen (S606) erster Messdaten vom Endgerät mindestens zweimal, wobei die ersten Messdaten Anwenderidentitätsdaten des Endgerätes und Identitätsdaten der primären bedienenden Zelle des Endgerätes enthalten;
Berechnen (S607) der Änderungsrate der primären bedienenden Zelle gemäß den Identitätsdaten der primären bedienenden Zelle in den ersten Messdaten, die mindestens zweimal erfasst werden;
Bestimmen (S608), ob die Änderungsrate der primären bedienenden Zelle einen Änderungsratenschwellenwert erreicht; und
Bestimmen (S609), dass sich das Endgerät in einer Außenumgebung befindet, wenn die Änderungsrate der primären bedienenden Zelle die Änderungsrate erreicht, Bestimmen (S610), dass sich das Endgerät in einer Innenumgebung befindet, wenn die Änderungsrate der primären bedienenden Zelle den Änderungsratenschwellenwert nicht erreicht, und Verwenden (S611) eines Ergebnisses dieses Males des Bestimmens als ein zweites Bestimmungsergebnis;
das Bestimmen gemäß der Gebäudeeigenschaft, die dem Längengrad und dem Breitengrad des Endgerätes entspricht, eines Umgebungstyps, der dem Endgerät entspricht, Folgendes umfasst:
Erfassen zweiter Messdaten vom Endgerät, wobei die zweiten Messdaten die Anwenderidentitätsdaten des Endgerätes und Ortsdaten des Endgerätes enthalten;
Durchführen (S612) einer Ortung gemäß den Ortsdaten, Durchführen einer Ortung auf der Grundlage einer Umlaufzeit, RTT, und eines Zellindex, die aus einem Datenaustausch zwischen dem Endgerät und der Basisstation stammen, oder Durchführen einer Ortung auf der Grundlage eines Signalmerkmalabgleichs des Endgerätes, um den Längengrad und den Breitengrad des Endgerätes zu erfassen; und
Erhalten (S613) der Gebäudeeigenschaft eines entsprechenden Ortes gemäß dem Längengrad und dem Breitengrad, Bestimmen gemäß der Gebäudeeigenschaft des Umgebungstyps, der dem Endgerät entspricht, und Verwenden eines Ergebnisses dieses Males des Bestimmens als ein drittes Bestimmungsergebnis; und
das Bestimmen gemäß der im Gebäude verteilten Zellidentität des Endgerätes eines Umgebungstyps, der dem Endgerät entspricht, Folgendes umfasst:
Erfassen dritter Messdaten vom Endgerät, wobei die dritten Messdaten die Anwenderidentitätsdaten des Endgerätes und die im Gebäude verteilte Zellidentität des Endgerätes enthalten und die im Gebäude verteilte Zellidentität verwendet wird, zu unterscheiden, ob eine Zelle, die dem Endgerät entspricht, eine im Gebäude verteilte Zelle oder eine außerhalb des Gebäudes verteilte Zelle ist;
Bestimmen (S614) gemäß der im Gebäude verteilten Zellidentität des Umgebungstyps, der dem Endgerät entspricht, und Verwenden eines Ergebnisses dieses Males des Bestimmens als ein viertes Bestimmungsergebnis; und
Konfigurieren (S615) einer voreingestellten Priorität, die jedem Bestimmungsergebnis des ersten Bestimmungsergebnisses, des zweiten Bestimmungsergebnisses, des dritten Bestimmungsergebnisses und des vierten Bestimmungsergebnisses entspricht, und umfassendes Bestimmen (S616) gemäß dem ersten Bestimmungsergebnis, dem zweiten Bestimmungsergebnis, dem dritten Bestimmungsergebnis, dem vierten Bestimmungsergebnis und der voreingestellten Priorität, die jedem Bestimmungsergebnis entspricht, des Umgebungstyps, der dem Endgerät entspricht.

2. Verfahren nach Anspruch 1, wobei das Berechnen (S601) der Bewegungsgeschwindigkeit des Endgerätes Folgendes umfasst:
Erfassen vierter Messdaten des Endgerätes mindestens zweimal, wobei die vierten Messdaten die Anwenderidentitätsdaten des Endgerätes, Zeitdaten des Endgerätes und die Ortsdaten des Endgerätes enthalten, und Berechnen der Bewegungsgeschwindigkeit des Endgerätes gemäß den Zeitdaten des Endgerätes und den Ortsdaten des Endgerätes; oder
Berechnen der Bewegungsgeschwindigkeit des Endgerätes in einer Doppler-Frequenzverschiebungsweise.

3. Verfahren nach Anspruch 1, wobei das Bestimmen (S602), ob die Bewegungsgeschwindigkeit des Endgerätes einen Geschwindigkeitsschwellenwert erreicht, Folgendes umfasst:
Bestimmen, ob eine durchschnittliche Bewegungsgeschwindigkeit des Endgerätes in der gesamten Zeit oder einer voreingestellten Zeit den voreingestellten Geschwindigkeitsschwellenwert erreicht, wobei sich das Endgerät und die Basisstation in der gesamten Zeit oder der voreingestellten Zeit im Dienstverbindungszustand befinden; oder
Bestimmen, ob eine Anzahl von Malen, die eine momentane Bewegungsgeschwindigkeit des Endgerätes in der gesamten Zeit oder einer voreingestellten Zeit den Geschwindigkeitsschwellenwert erreicht, eine voreingestellte Anzahl erreicht, wobei sich das Endgerät und die Basisstation in der gesamten Zeit oder der voreingestellten Zeit im Dienstverbindungszustand befinden.

4. Verfahren nach einem der Ansprüche 1 bis 3, wobei dann, wenn das Verfahren durch das Endgerät ausgeführt wird, das Verfahren ferner Folgendes umfasst: Berichten (S1217) eines endgültigen Ergebnisses durch das Endgerät zu der Basisstation.

5. Identifikationsvorrichtung, die Folgendes umfasst:
ein Erfassungsmodul (100), das konfiguriert ist, mindestens einen Typ der folgenden Daten zu erfassen: eine Bewegungsgeschwindigkeit eines Endgerätes, eine Änderungsrate einer primären bedienenden Zelle des Endgerätes, eine Gebäudeeigenschaft, die dem Längengrad und dem Breitengrad des Endgerätes entspricht, und eine im Gebäude verteilten Zellidentität des Endgerätes, wobei das Erfassungsmodul (100) mindestens zwei Typen der folgenden Daten erfasst: die Bewegungsgeschwindigkeit des Endgerätes, die Änderungsrate der primären bedienenden Zelle des Endgerätes und die Gebäudeeigenschaft, die dem Längengrad und dem Breitengrad des Endgerätes entspricht; und
ein erstes Bestimmungsmodul (200), das konfiguriert ist, einen Umgebungstyp, der dem Endgerät entspricht, gemäß dem mindestens einen Typ der folgenden Daten zu bestimmen: der Bewegungsgeschwindigkeit des Endgerätes, der Änderungsrate der primären bedienenden Zelle des Endgerätes, der Gebäudeeigenschaft, die dem Längengrad und dem Breitengrad des Endgerätes entspricht, und der im Gebäude verteilten Zellidentität des Endgerätes, wobei das erste Bestimmungsmodul (200) ferner konfiguriert ist, einzeln gemäß jedem der mindestens zwei Typen von Daten einen Umgebungstyp, der dem Endgerät entspricht, zu bestimmen, um mindestens zwei Bestimmungsergebnisse zu erhalten; und
die Vorrichtung ferner Folgendes umfasst:
ein Prioritätskonfigurationsmodul (300), das konfiguriert ist, eine voreingestellte Priorität, die jedem Bestimmungsergebnis der mindestens zwei Bestimmungsergebnisse entspricht, zu konfigurieren; und
ein zweites Bestimmungsmodul (400), das konfiguriert ist, den Umgebungstyp, der dem Endgerät entspricht, gemäß den mindestens zwei Bestimmungsergebnissen und der voreingestellten Priorität, die jedem Bestimmungsergebnis entspricht, umfassend zu bestimmen,
wobei sich das Endgerät und eine Basisstation in einem Dienstverbindungszustand befinden und der Umgebungstyp eine Außenumgebung und eine Innenumgebung umfasst;
**gekennzeichnet durch**
ein Berechnungsmodul (500), das konfiguriert ist, die Bewegungsgeschwindigkeit des Endgerätes zu berechnen, wobei
das erste Bestimmungsmodul (200) speziell konfiguriert ist, zu bestimmen, ob die Bewegungsgeschwindigkeit des Endgerätes einen Geschwindigkeitsschwellenwert erreicht; und
wenn ja, zu bestimmen, dass sich das Endgerät in einer Außenumgebung befindet, und sonst zu bestimmen, dass sich das Endgerät in einer Innenumgebung befindet, und ein Ergebnis dieses Males des Bestimmens als ein erstes Bestimmungsergebnis zu verwenden;
das Erfassungsmodul (100) speziell konfiguriert ist, erste Messdaten vom Endgerät mindestens zweimal zu erfassen, wobei die ersten Messdaten Anwenderidentitätsdaten des Endgerätes und Identitätsdaten der primären bedienenden Zelle des Endgerätes enthalten;
das Berechnungsmodul (500) ferner konfiguriert ist, die Änderungsrate der primären bedienenden Zelle gemäß den Identitätsdaten der primären bedienenden Zelle in den ersten Messdaten, die mindestens zweimal erfasst werden, zu berechnen;
das erste Bestimmungsmodul (200) speziell konfiguriert ist, zu bestimmen, ob die Änderungsrate der primären bedienenden Zelle einen Änderungsratenschwellenwert erreicht; und
wenn ja, zu bestimmen, dass sich das Endgerät in einer Außenumgebung befindet, und sonst zu bestimmen, dass sich das Endgerät in einer Innenumgebung befindet, und ein Ergebnis dieses Males des Bestimmens als ein zweites Bestimmungsergebnis zu verwenden;
das Erfassungsmodul (100) speziell konfiguriert ist, zweite Messdaten vom Endgerät zu erfassen, wobei die zweiten Messdaten die Anwenderidentitätsdaten des Endgerätes und Ortsdaten des Endgerätes enthalten; und
Durchführen einer Ortung gemäß den Ortsdaten, Durchführen einer Ortung auf der Grundlage einer Umlaufzeit, RTT, und eines Zellindex, die aus einem Datenaustausch zwischen dem Endgerät und der Basisstation stammen, oder Durchführen einer Ortung auf der Grundlage eines Signalmerkmalabgleichs des Endgerätes, um den Längengrad und den Breitengrad des Endgerätes zu erfassen;
das erste Bestimmungsmodul (200) speziell konfiguriert ist, die Gebäudeeigenschaft eines entsprechenden Ortes gemäß dem Längengrad und dem Breitengrad zu erhalten, den Umgebungstyp, der dem Endgerät entspricht, gemäß der Gebäudeeigenschaft zu bestimmen und ein Ergebnis dieses Males des Bestimmens als ein drittes Bestimmungsergebnis zu verwenden;
das Erfassungsmodul (100) speziell konfiguriert ist, dritte Messdaten vom Endgerät zu erfassen, wobei die dritten Messdaten die Anwenderidentitätsdaten des Endgerätes und die im Gebäude verteilte Zellidentität des Endgerätes enthalten und die im Gebäude verteilte Zellidentität verwendet wird, zu unterscheiden, ob eine Zelle, die dem Endgerät entspricht, eine im Gebäude verteilte Zelle oder eine außerhalb des Gebäudes verteilte Zelle ist;
das erste Bestimmungsmodul (200) speziell konfiguriert ist, gemäß der im Gebäude verteilten Zellidentität den Umgebungstyp, der dem Endgerät entspricht, zu bestimmen und ein Ergebnis dieses Males des Bestimmens als ein viertes Bestimmungsergebnis zu verwenden;
das Prioritätskonfigurationsmodul (300) speziell konfiguriert ist, eine voreingestellte Priorität, die jedem Bestimmungsergebnis des ersten Bestimmungsergebnisses, des zweiten Bestimmungsergebnisses, des dritten Bestimmungsergebnisses und des vierten Bestimmungsergebnisses entspricht, zu bestimmen; und
das zweite Bestimmungsmodul (400) speziell konfiguriert ist, gemäß dem ersten Bestimmungsergebnis, dem zweiten Bestimmungsergebnis, dem dritten Bestimmungsergebnis, dem vierten Bestimmungsergebnis und der voreingestellten Priorität, die jedem Bestimmungsergebnis entspricht, den Umgebungstyp, der dem Endgerät entspricht, umfassend zu bestimmen.

6. Vorrichtung nach Anspruch 5, wobei das Berechnungsmodul (500) speziell konfiguriert ist zum
Erfassen vierter Messdaten des Endgerätes mindestens zweimal, wobei die vierten Messdaten die Anwenderidentitätsdaten des Endgerätes, Zeitdaten des Endgerätes und die Ortsdaten des Endgerätes enthalten, und Berechnen der Bewegungsgeschwindigkeit des Endgerätes gemäß den Zeitdaten des Endgerätes und den Ortsdaten des Endgerätes; oder zum
Berechnen der Bewegungsgeschwindigkeit des Endgerätes in einer Doppler-Frequenzverschiebungsweise.

7. Vorrichtung nach Anspruch 5, wobei das Bestimmungsmodul (200) speziell konfiguriert ist zum
Bestimmen, ob eine durchschnittliche Bewegungsgeschwindigkeit des Endgerätes in der gesamten Zeit oder einer voreingestellten Zeit den voreingestellten Geschwindigkeitsschwellenwert erreicht, wobei sich das Endgerät und die Basisstation in der gesamten Zeit oder der voreingestellten Zeit im Dienstverbindungszustand befinden; oder zum
Bestimmen, ob eine Anzahl von Malen, die eine momentane Bewegungsgeschwindigkeit des Endgerätes in der gesamten Zeit oder einer voreingestellten Zeit den Geschwindigkeitsschwellenwert erreicht, eine voreingestellte Anzahl erreicht, wobei sich das Endgerät und die Basisstation in der gesamten Zeit oder der voreingestellten Zeit im Dienstverbindungszustand befinden.

8. Vorrichtung nach einem der Ansprüche 5 bis 7, wobei die Vorrichtung ein Endgerät (220) ist und das Endgerät (220) ferner Folgendes umfasst:
ein Berichtsmodul, das konfiguriert ist, ein endgültiges Bestimmungsergebnis zu der Basisstation (210) zu berichten.

9. Netzsystem, **gekennzeichnet durch** eine Basisstation (210) und die Vorrichtung nach einem der Ansprüche 5 bis 8.

## Revendications

1. Procédé d'identification, comprenant :
l'acquisition (S101) d'au moins un type des informations suivantes : une vitesse de déplacement d'un terminal, un taux de changement d'une cellule de desserte primaire du terminal, un attribut de bâtiment correspondant à la longitude et à la latitude du terminal, et une identité de cellule distribuée d'intérieur du terminal ; et
la détermination (S 102), selon ledit au moins un type des informations suivantes : la vitesse de déplacement du terminal, le taux de changement de la cellule de desserte primaire du terminal, l'attribut de bâtiment correspondant à la longitude et à la latitude du terminal, et l'identité de cellule distribuée d'intérieur du terminal, d'un type d'environnement correspondant au terminal,
dans lequel la détermination (S 102) comprend :
l'acquisition (S201) d'au moins deux types des informations suivantes : la vitesse de déplacement du terminal, le taux de changement de la cellule de desserte primaire du terminal, l'attribut de bâtiment correspondant à la longitude et à la latitude du terminal, et l'identité de cellule distribuée d'intérieur du terminal, la détermination (S202), séparément selon chacun desdits au moins deux types d'information, d'un type d'environnement correspondant au terminal, afin d'obtenir au moins deux résultats de détermination ; la configuration (S203) d'une priorité préréglée correspondante pour chaque résultat de détermination ; et la détermination complète, selon lesdits au moins deux résultats de détermination et la priorité préréglée correspondant à chaque résultat de détermination, du type d'environnement correspondant au terminal,
dans lequel le terminal et une station de base se trouvent dans un état de connexion de service, et le type d'environnement comprend un environnement d'extérieur et un environnement d'intérieur ;
**caractérisé par** la détermination (S202), séparément selon chacun desdits au moins deux types d'informations, d'un type d'environnement correspondant au terminal, afin d'obtenir au moins deux résultats de détermination ; la configuration (S203) d'une priorité préréglée correspondante pour chaque résultat de détermination ; et la détermination complète, selon lesdits au moins deux résultats de détermination et la priorité préréglée correspondant à chaque résultat de détermination, du type d'environnement correspondant au terminal comprennent :
dans lequel la détermination, selon la vitesse de déplacement du terminal, d'un type d'environnement correspondant au terminal comprend :
le calcul (S601) de la vitesse de déplacement du terminal ;
la détermination (S602) du fait de savoir si la vitesse de déplacement du terminal atteint un seuil de vitesse ; et
si la vitesse de déplacement du terminal atteint le seuil de vitesse, la détermination (S603) que le terminal se trouve dans un environnement d'extérieur, et si la vitesse de déplacement du terminal n'atteint pas le seuil de vitesse, la détermination (S604) que le terminal se trouve dans un environnement d'intérieur, et l'utilisation (S605) d'un résultat de cette instance de détermination comme un premier résultat de détermination ;
la détermination, selon le taux de changement de la cellule de desserte primaire du terminal, d'un type d'environnement correspondant au terminal comprend :
l'acquisition (S606) de premières informations de mesure du terminal au moins deux fois, les premières informations de mesure comprenant des informations d'identité utilisateur du terminal et des informations d'identité de la cellule de desserte primaire du terminal ;
le calcul (S607) du taux de changement de la cellule de desserte primaire selon les informations d'identité de la cellule de desserte primaire dans les premières informations de mesure qui sont acquises au moins deux fois ;
la détermination (S608) du fait de savoir si le taux de changement de la cellule de desserte primaire atteint un seuil de taux de changement ; et
si le taux de changement de la cellule de desserte primaire atteint le taux de changement, la détermination (S609) que le terminal se trouve dans un environnement d'extérieur, et si le taux de changement de la cellule de desserte primaire n'atteint pas le seuil de taux de changement, la détermination (S610) que le terminal se trouve dans un environnement d'intérieur, et l'utilisation (S611) d'un résultat de cette instance de détermination comme un second résultat de détermination ;
la détermination, selon l'attribut de bâtiment correspondant à la longitude et à la latitude du terminal, d'un type d'environnement correspondant au terminal comprend :
l'acquisition de deuxièmes informations de mesure du terminal, les deuxièmes informations de mesure comprenant les informations d'identité utilisateur et les informations d'emplacement du terminal ;
l'exécution (S612) de la localisation selon les informations d'emplacement, l'exécution de la localisation sur la base d'un temps de propagation en boucle, RTT, et d'un indice de cellule qui proviennent d'un échange d'informations entre le terminal et la station de base, ou l'exécution de la localisation sur la base d'une mise en correspondance des particularités de signal du terminal, afin d'acquérir la longitude et la latitude du terminal ; et
l'obtention (S613) de l'attribut de bâtiment d'un emplacement correspondant selon la longitude et la latitude, la détermination, selon l'attribut de bâtiment, du type d'environnement correspondant au terminal, et l'utilisation d'un résultat de cette instance de détermination comme un troisième résultat de détermination ; et
la détermination, selon l'identité de cellule distribuée d'intérieur du terminal, d'un type d'environnement correspondant au terminal comprend :
l'acquisition de troisièmes informations de mesure du terminal, les troisièmes informations de mesure comprenant les informations de l'identité utilisateur du terminal et de l'identité de cellule distribuée d'intérieur du terminal, et l'identité de cellule distribuée d'intérieur est utilisée pour distinguer si une cellule correspondant au terminal est une cellule distribuée d'intérieur ou une cellule distribuée d'extérieur ;
la détermination (S614), selon l'identité de cellule distribuée d'intérieur, du type d'environnement correspondant au terminal, et l'utilisation d'un résultat de cette instance de détermination comme un quatrième résultat de détermination ; et
la configuration (S615) d'une priorité préréglée correspondant à chaque résultat de détermination du premier résultat de détermination, du deuxième résultat de détermination, du troisième résultat de détermination et du quatrième résultat de détermination, et la détermination complète (S616), selon le premier résultat de détermination, le deuxième résultat de détermination, le troisième résultat de détermination, le quatrième résultat de détermination et la priorité préréglée correspondant à chaque résultat de détermination, du type d'environnement correspondant au terminal.

2. Procédé selon la revendication 1, dans lequel le calcul (S601) de la vitesse de déplacement du terminal comprend :
l'acquisition de quatrièmes informations de mesure du terminal au moins deux fois, les quatrièmes informations de mesure comprenant les informations d'identité utilisateur du terminal, les informations temporelles du terminal et les informations d'emplacement du terminal, et le calcul de la vitesse de déplacement du terminal selon les informations temporelles du terminal et les informations d'emplacement du terminal ; ou
le calcul de la vitesse de déplacement du terminal à la manière d'un décalage de fréquence Doppler.

3. Procédé selon la revendication 1, dans lequel la détermination (S602) du fait de savoir si la vitesse de déplacement du terminal atteint un seuil de vitesse comprend :
la détermination du fait de savoir si une vitesse de déplacement moyenne du terminal pendant le temps entier ou un temps préréglé atteint le seuil de vitesse préréglé, le terminal et la station de base se trouvant dans l'état de connexion de service pendant le temps entier ou le temps préréglé ; ou
la détermination du fait de savoir si un nombre de fois qu'une vitesse de déplacement instantanée du terminal atteint le seuil de vitesse pendant le temps entier ou un temps préréglé atteint un nombre préréglé, le terminal et la station de base se trouvant dans l'état de connexion de service pendant le temps entier ou le temps préréglé.

4. Procédé selon l'une quelconque des revendications 1 à 3, dans lequel, si le procédé est exécuté par le terminal, le procédé comprend en outre : le signalement (S1217), par le terminal, d'un résultat final à la station de base.

5. Appareil d'identification, comprenant :
un module d'acquisition (100), configuré pour acquérir au moins un type des informations suivantes : une vitesse de déplacement d'un terminal, un taux de changement d'une cellule de desserte primaire du terminal, un attribut de bâtiment correspondant à la longitude et à la latitude du terminal, et une identité de cellule distribuée d'intérieur du terminal, si le module d'acquisition (100) acquiert au moins deux types des informations suivantes : la vitesse de déplacement du terminal, le taux de changement de la cellule de desserte primaire du terminal, l'attribut de bâtiment correspondant à la longitude et à la latitude du terminal ; et
un premier module de détermination (200), configuré pour déterminer, selon ledit au moins un type des informations suivantes : la vitesse de déplacement du terminal, le taux de changement de la cellule de desserte primaire du terminal, l'attribut de bâtiment correspondant à la longitude et à la latitude du terminal et l'identité de cellule distribuée d'intérieur du terminal, un type d'environnement correspondant au terminal, le premier module de détermination (200) est en outre configuré pour déterminer, séparément selon chacun desdits au moins deux types d'informations, un type d'environnement correspondant au terminal, afin d'obtenir au moins deux résultats de détermination ; et
l'appareil comprend en outre :
un module de configuration de priorité (300), configuré pour configurer une priorité préréglée correspondant à chaque résultat de détermination desdits au moins deux résultats de détermination ; et
un deuxième module de détermination (400), configuré pour déterminer complètement, selon lesdits au moins deux résultats de détermination et la priorité préréglée correspondant à chaque résultat de détermination, le type d'environnement correspondant au terminal,
le terminal et une station de base se trouvant dans un état de connexion de service, et le type d'environnement comprenant un environnement d'extérieur et un environnement d'intérieur ;
**caractérisé en ce qu'**il comprend en outre :
un module de calcul (500), configuré pour calculer la vitesse de déplacement du terminal, dans lequel
le premier module de détermination (200) est spécifiquement configuré pour déterminer si la vitesse de déplacement du terminal atteint un seuil de vitesse ; et
si oui, déterminer que le terminal se trouve dans un environnement d'extérieur, et sinon, déterminer que le terminal se trouve dans un environnement d'intérieur, et utiliser un résultat de cette instance de détermination comme un premier résultat de détermination ;
le module d'acquisition (100) est spécifiquement configuré pour acquérir des premières informations de mesure du terminal au moins deux fois, les premières informations de mesure comprenant des informations d'identité utilisateur du terminal et des information d'identité de la cellule de desserte primaire du terminal ;
le module de calcul (500) est en outre configuré pour calculer le taux de changement de la cellule de desserte primaire selon les informations d'identité de la cellule de desserte primaire dans les premières informations de mesure qui sont acquises au moins deux fois ;
le premier module de détermination (200) est spécifiquement configuré pour déterminer si le taux de changement de la cellule de desserte primaire atteint un seuil de taux de changement ; et
si oui, déterminer que le terminal se trouve dans un environnement d'extérieur, et sinon, déterminer que le terminal se trouve dans un environnement d'intérieur, et utiliser un résultat de cette instance de détermination comme un deuxième résultat de détermination ;
le module d'acquisition (100) est spécifiquement configuré pour acquérir des deuxièmes informations de mesure du terminal, les deuxièmes informations de mesure comprenant les informations d'identité utilisateur du terminal et les informations d'emplacement du terminal ; et
effectuer la localisation selon les informations d'emplacement, effectuer la localisation sur la base d'un temps de propagation en boucle, RTT, et d'un indice de cellule qui proviennent d'un échange d'informations entre le terminal et la station de base, ou effectuer la localisation sur la base d'une mise en correspondance des particularités de signal du terminal, pour acquérir la longitude et latitude du terminal ;
le premier module de détermination (200) est spécifiquement configuré pour : obtenir l'attribut de bâtiment d'un emplacement correspondant selon la longitude et la latitude, déterminer, selon l'attribut de bâtiment, le type d'environnement correspondant au terminal, et utiliser un résultat de cette instance de détermination comme un troisième résultat de détermination ;
le module d'acquisition (100) est spécifiquement configuré pour acquérir des troisièmes informations de mesure du terminal, les troisièmes informations de mesure comprenant les informations d'identité utilisateur du terminal et l'identité de cellule distribuée d'intérieur du terminal, et l'identité de cellule distribuée d'intérieur est utilisée pour distinguer si une cellule correspondant au terminal est une cellule distribuée d'intérieur ou une cellule distribuée d'extérieur ;
le premier module de détermination (200) est spécifiquement configuré pour :
déterminer, selon l'identité de cellule distribuée d'intérieur, le type d'environnement correspondant au terminal, et utiliser un résultat de cette instance de détermination comme un quatrième résultat de détermination ;
le module de configuration de priorité (300) est spécifiquement configuré pour configurer une priorité préréglée correspondant à chaque résultat de détermination du premier résultat de détermination, du deuxième résultat de détermination, du troisième résultat de détermination et du quatrième résultat de détermination ; et
le deuxième module de détermination (400) est spécifiquement configuré pour déterminer complètement, selon le premier résultat de détermination, le deuxième résultat de détermination, le troisième résultat de détermination, le quatrième résultat de détermination et la priorité préréglée correspondant à chaque résultat de détermination, le type d'environnement correspondant au terminal.

6. Appareil selon la revendication 5, dans lequel le module de calcul (500) est spécifiquement configuré pour :
acquérir des quatrièmes informations de mesure du terminal au moins deux fois, les quatrièmes informations de mesure comprenant les informations d'identité utilisateur du terminal, les informations temporelles du terminal et les informations d'emplacement du terminal, et calculer la vitesse de déplacement du terminal selon les informations temporelles du terminal et les informations d'emplacement du terminal ; ou
calculer la vitesse de déplacement du terminal à la manière d'un décalage de fréquence Doppler.

7. Appareil selon la revendication 5, dans lequel le premier module de détermination (200) est spécifiquement configuré pour :
déterminer si une vitesse de déplacement moyenne du terminal pendant le temps entier ou un temps préréglé atteint le seuil de vitesse, le terminal et la station de base se trouvant dans l'état de connexion de service pendant le temps entier ou le temps préréglé ; ou
déterminer si un nombre de fois qu'une vitesse de déplacement instantanée du terminal atteint le seuil de vitesse pendant le temps entier ou un temps préréglé atteint un nombre préréglé, dans lequel le terminal et la station de base se trouvent dans l'état de connexion de service pendant le temps entier ou le temps préréglé.

8. Appareil selon l'une quelconque des revendications 5 à 7, l'appareil étant un terminal (220), et le terminal (220) comprenant en outre :
un module de signalement, configuré pour signaler un résultat de détermination final à la station de base (210).

9. Système de réseau, **caractérisé en ce qu'**il comprend une station de base (210) et l'appareil selon l'une quelconque des revendications 5 à 8.
